(19) Europäisches Patentamt European Patent Office Office européen des brevets

(11) **EP 3 543 983 B1**

(12) **EUROPEAN PATENT SPECIFICATION**

(45) Date of publication and mention
of the grant of the patent:
**04.11.2020 Bulletin 2020/45**

(51) Int Cl.:
**G08B 17/00** (2006.01)   **G01S 17/88** (2006.01)
**G08B 17/107** (2006.01)   **G08B 17/12** (2006.01)
**G08B 29/24** (2006.01)

(21) Application number: **19164187.7**

(22) Date of filing: **20.03.2019**

(54) **FIRE PREVENTION SELF-CALIBRATING REMOTE SENSING SYSTEM AND METHOD THEREOF**

SELBSTKALIBRIERENDES FERNERKENNUNGSSYSTEM FÜR BRANDSCHUTZ UND VERFAHREN DAFÜR

SYSTÈME DE DÉTECTION À DISTANCE À ÉTALONNAGE AUTOMATIQUE POUR LA PRÉVENTION DES INCENDIES ET PROCÉDÉ ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.03.2018 IT 201800003797**

(43) Date of publication of application:
**25.09.2019 Bulletin 2019/39**

(73) Proprietor: **Goel Societa' Cooperativa Sociale 89048 Siderno (RC) (IT)**

(72) Inventor: **LO FEUDO, Teresa 87050 Rovito (CS) (IT)**

(74) Representative: **Bertolotto, Simone et al Studio Torta S.p.A. Via Viotti, 9 10121 Torino (IT)**

(56) References cited:
**CN-A- 106 526 614    GB-A- 2 311 852 US-A- 4 853 543    US-B2- 7 566 881**

- **BELLECCI C ET AL: "Application of a CO2 dial system for infrared detection of forest fire and reduction of false alarm", APPLIED PHYSICS B ; LASERS AND OPTICS, SPRINGER, BERLIN, DE, vol. 87, no. 2, 28 March 2007 (2007-03-28) , pages 373-378, XP019515577, ISSN: 1432-0649, DOI: 10.1007/S00340-007-2607-9**

## Description

TECHNICAL FIELD

The present invention relates to a fire prevention self-calibrating remote sensing system and an associated method for detecting fires.

BACKGROUND ART

Instruments for measuring gases and/or particulates are known that are adapted to characterize gases and/or particulates, for example, in terms of concentration, dimensions, chemical-physical composition and so on.

For example, optoelectronic systems are known which are based on an active remote sensing technique known as "Light Detection and Ranging" (LIDAR), configured to determine the concentration of chemical species in closed or open environments, for example, in the atmosphere or stretches of water. Hereinafter, these optoelectronic systems are also referred to as LIDAR systems. In particular, LIDAR systems are based on the interaction between electromagnetic radiation and a propagation medium of the electromagnetic radiation (for example, the atmosphere), the electromagnetic radiation being produced by a laser source, configured to generate a coherent light beam of a desired wavelength. LIDAR systems are based on the same basic principle of operation as radar, but unlike radar they use electromagnetic waves having wavelengths within the optical spectrum, and consequently comparable to the sizes of molecules and atmospheric aerosols.

From its first applications, LIDAR technology has found extensive use as a powerful tool of investigation and calibration of certain physical parameters in the atmosphere, such as, for example, the temperature and concentration of water vapour. As LIDAR technology evolved over the years, both with regard to the laser sources and with regard to the associated electronic control systems, it has been possible to broaden the fields of application of LIDAR systems.

For example, LIDAR systems are known that are configured to carry out survey scanning, or perform three-dimensional scans of solid objects, or for measuring the height of the planetary boundary layer (PBL), or even for measuring wind profiles.

In addition, fire prevention LIDAR systems are known that are configured to detect the presence of a fire, for example, based on detecting the smoke of forest fires, in order to block it from spreading.

Independently of the application, in their simplest configuration, LIDAR systems of a known type typically comprise a single laser source tuned to a desired wavelength, and a single detection module tuned to said wavelength. In order to solve with sufficient accuracy a mathematical equation on which the LIDAR technique is based, as better explained below, it is preferable to use laser sources of high emissive power. However, high-power laser sources are typically very expensive and difficult to use, due to the need to observe stringent safety measures, in order to avoid injury to a human operator potentially caused by undesired biological effects of laser radiation on the operator's eyes and skin.

Optoelectronic LIDAR systems of the differential absorption LIDAR (DIAL) type are also known, wherein two laser pulses, respectively at a first and a second wavelength, are sent through the environment containing the gas or particulate to be characterized, the first wavelength being coincident with an absorption line of the substance to be characterized, and the second wavelength being different from the first wavelength and, in particular, being taken on the tail of the bell-shaped resonance curve of said substance. In the following, these optoelectronic systems and the related measuring techniques are also referred to as DIAL systems and DIAL techniques, respectively.

DIAL systems allow quantitative characterization of the substance to be studied, enabling, for example and unlike conventional LIDAR systems, to distinguish individual molecules characterized by a given spectral absorption line.

In addition, measuring instruments are known that are called ceilometers, based on the emission of a laser beam in the atmosphere by a laser source tuned to a single wavelength, and originally conceived for characterizing clouds, especially in airport environments. In particular, ceilometers can comprise laser sources that emit short, high-power pulses into the atmosphere, in a vertical direction. By means of special sensor devices, ceilometers can receive and, if necessary, communicate accurate information on the amount of light reflected by any gaseous obstacles to the propagation of light, such as, for example, clouds, fog and mist. Ceilometers calculate the height of a gaseous obstacle with respect to the surface on the basis of the return time of the reflected laser radiation, taking into consideration the possibility that the laser radiation passes through multiple cloud layers having different characteristics, being able to also calculate, for example, the height at which the cloud layers are located and their optical thickness.

Ceilometers are typically more compact and easier to use than conventional types of LIDAR/DIAL systems, but are generally less versatile regarding the possible fields of application.

Further measuring instruments for characterizing gases and particulates are also known as alternatives to LIDAR/DIAL systems or ceilometers; for example, further measuring instruments are known that use any type of pulsed and/or continuous laser source (for example, cavity ring, semiconductor diodes, $CO_2$ (carbon dioxide) laser, Nd:YAG laser, femtosecond laser, etc.), and/or measuring instruments based on sensing techniques that exploit the Beer-Lambert law, spectrometers, spectrophotometers, optical spectroscopy instruments, biomedical apparatuses and still other instruments.

One common drawback of the aforementioned classes of instruments of a known type regards the fact that the accuracy of their measurements depends on the knowledge of fundamental optical parameters linked to the substance to be characterized, such as, for example, the absorption cross-section, the atmospheric attenuation coefficient and the volumetric backscattering coefficient. The drawback is due to the lack of instruments for rapidly and precisely measuring said optical coefficients.

Known methods for obtaining information on the significant optical coefficients for the desired characterization include consulting technical manuals, the use of numerical simulations and/or experiments that send an optical beam into the atmosphere to monitor atmospheric background conditions.

However, the accuracy of these methods is partially compromised in that the values of the optical coefficients do not only depend on the physical-chemical characteristics of the substances that it is wished to study, but also on the electro-optical and power characteristics unique to the energy source of the measuring instrument, for example, the laser source in the case of LIDAR and DIAL systems.

It is clear that the optical coefficients obtainable from technical manuals or, in general, by consulting scientific literature, can regard laser sources with very different power characteristics from those of the measuring instrument that is intended to be used. Furthermore, the accuracy with which numerical simulations can reproduce the characteristics of the optical beam produced by the laser source is usually insufficient. Similarly, the aforementioned experiments may use laser emission powers and wavelengths that are not always the same, and often not even similar, to those of the laser sources available.

Consequently, known methods for determining fundamental optical parameters for solving measurement equations based on laser sources induce measurement errors of up to 50%, unacceptable for many fields of application.

Some LIDAR/DIAL systems are configured to generate a reference signal obtained from white measurements of the atmosphere. In these cases, the laser source is pointed towards the atmosphere so as to characterize the atmospheric background conditions, correlating them to the laser's power characteristics.

Nevertheless, this method considerably slows measurement times, as it is necessary to interrupt measuring every time it is advisable to recalibrate the instrument. For example, it may be opportune to perform successive calibrations of the same instrument over time as the power characteristics of the laser source, once activated, can vary over time, even over the span of just a day, altering said optical parameters in an unforeseeable manner. Furthermore, the successive calibrations are indispensable because of changes in the homogeneity of the atmosphere during the day, which consequently changes its optical characteristics. Consequently, it would be necessary to activate a series of reference measurement procedures that would considerably slow the entire experiment, because certain chemical-physical phenomena and processes that take place in the atmosphere have time scales of around ten minutes or less in the presence of turbulent atmosphere.

In particular, one drawback of fire prevention LIDAR remote sensing systems consists in that the known calibration methods are not sufficiently rapid and accurate to promptly detect a fire before it spreads excessively.

Patent US4853543 relates to tracer gas detection in the near-surface atmosphere. More specifically, this document regards a remote prospecting system for minerals, petroleum and natural gas deposits, geothermal steam deposits, and leaks in natural gas pipelines by detecting a tracer gas using a single laser beam. However, the aforementioned problems remain unsolved.

There is thus awareness of the need for a remote sensing system that enables taking measurements of gases and/or particulates in a rapid and accurate manner, and consequently succeeds in promptly detecting a fire before it spreads excessively.

DISCLOSURE OF INVENTION

The object of the present invention is to provide a fire detector and a fire-detection method, adapted to overcome the drawbacks of the known art.

According to the present invention, a fire detector and a fire-detection method are provided, as defined in the appended claims.

BRIEF DESCRIPTION OF THE DRAWINGS

For a better understanding of the present invention, some preferred embodiments will now be described, purely by way of non-limitative example, and with reference to the accompanying drawings, in which:

- Figure 1 schematically shows, by means of a block diagram, a measuring instrument of a known type for the characterization of gases and/or particulates comprising a laser source;

- Figure 2 schematically shows, by means of a block diagram, a calibration system according to one aspect of the present invention;
- Figure 3 schematically shows, by means of a block diagram, a calibration method according to one aspect of the present invention;
- Figure 4 shows a perspective view of a portion of the calibration system of Figure 2.
- Figure 5 schematically shows a cross-sectional view of the portion of Figure 4;
- Figure 6 schematically shows a cross-sectional view of a portion of a calibration system according to another aspect of the present invention;
- Figure 7 schematically shows a cross-sectional view of a portion of a calibration system according to a further aspect of the present invention;
- Figure 8 schematically shows, by means of a block diagram, a fire detector according to one embodiment of the present invention;
- Figure 9 schematically shows, by means of a block diagram, a fire-detection method of the system of Figure 8; and
- Figure 10 schematically shows, by means of a block diagram, a fire detector according to another embodiment of the present invention.


BEST MODE FOR CARRYING OUT THE INVENTION

The present invention can be applied to any remote sensing instrument that comprises a laser source and is based on an interaction between a laser beam emitted by the laser source and substances present in a volume traversed by the laser beam. In particular, purely by way of non-limitative example, reference will be made hereinafter to LIDAR or DIAL remote sensing instruments. For a better understanding of the present invention, the LIDAR and DIAL measuring techniques, starting with the LIDAR technique, are summarized below.

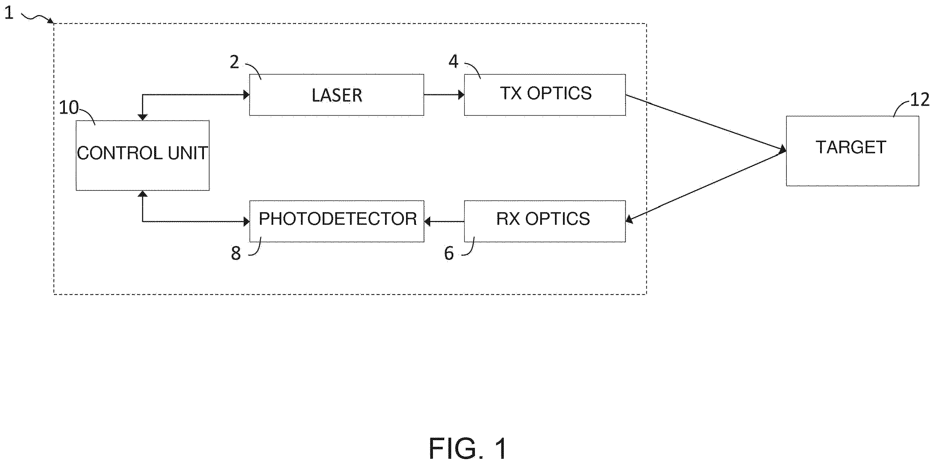

Figure 1 schematically shows, by means of a block diagram, a LIDAR system 1 of a known type. The LIDAR system 1 comprises a laser source 2, transmission optics 4 optically coupled to the laser source 2, reception optics 6, a photodetector module 8 optically coupled to the reception optics 6, and an electronic control unit 10 operatively coupled to the laser source 2 and the photodetector module 8. The reception optics 6 comprises, for example, a telescope. The photodetector module 8 comprises at least one photodetector device. For example, the photodetector module 8 comprises a single photodetector device configured to detect a portion of the optical spectrum. Alternatively, the photodetector module 8 comprises a plurality of photodetector devices configured to detect different portions of the optical spectrum. In particular, the photodetector module 8 can comprise, for example, a photodetector device for each wavelength to which it is wished to tune the laser source 2.

According to a measuring method of a known type implemented by the LIDAR system 1, the control unit 10 is configured to control the laser source 2 so that it emits a short laser pulse at a given wavelength. The laser pulse is sent into the atmosphere towards a target 12 by means of the transmission optics 4, which is designed so as to focus the energy emitted by the laser source 2 in a cone-shaped light beam with an aperture angle dependent on the transmission optics 4 and reaching a distance from the laser source 2 dependent on the power of the laser source 2, in a manner which is in itself known.

The target 12 is, for example, a cloud, a source of pollution, smoke generated by forest fires, or any atmospheric volume for which it is wished to characterize any gases and/or particulates present therein.

The light beam is partially reflected by the target 12, giving rise to back-scattered radiation collected by the reception optics 6 and measured by the photodetector module 8.

The electronic control unit 10 is further configured to receive information on the optical power received by the photodetector module 8 and to consequently obtain information on the target 12. In particular, and in a manner which is in itself known, this is possible by solving the so-called LIDAR equation, which puts the optical power received by the photodetector module 8 in relation with the optical power transmitted by the laser source 2 and the properties of the target 12 that it is intended to characterize.

Hereinafter, the following assumptions and approximations are considered valid:

- the optical scattering caused by the interaction between the light beam transmitted by the LIDAR system 1 and the target 12 is of the elastic type, i.e. the wavelength of the back-scattered radiation received is equal to that of the light beam sent by the laser source 2;
- the linewidth of the back-scattered radiation from the target 12 is very small with respect to the spectral window of the reception optics 6, so that it can be approximated to a Dirac delta function;
- the time trend of the laser pulse emitted by the laser source 2 is rectangular, i.e. the target 12 is uniformly illuminated by the light beam;
- in an overlapping zone between the field of view of the reception optics 6 and the light beam, the optical propagation medium is homogeneous and the probability that the back-scattered radiation reaches the optical receiver is unitary.

Accepting the aforementioned assumptions and approximations, the LIDAR equation is usually written in the following form:

$$P(\lambda_{\text{L}}, R) = P_{\text{L}} \xi(\lambda_{\text{L}}) \xi(R) \frac{A_0}{R^2} \beta(\lambda_{\text{L}}, R) \frac{c\tau_{\text{L}}}{2} \exp\left[-2 \int_0^R k(\lambda_{\text{L}}, R)\, dR\right] \setminus \qquad (1)$$

where $\lambda_{\text{L}}$ is the wavelength of the light beam, $P(\lambda_{\text{L}}, R)$ is the optical power received by the photodetector module 8 corresponding to the back-scattered radiation at distance $R$ from the LIDAR system 1, $P_{\text{L}}$ is the power of the light beam striking the target 12, $\xi(\lambda_{\text{L}})$ is the spectral transmission factor, $\xi(R)$ is the geometrical shape factor, $A_0$ is the active area of the reception optics 6, $\beta(\lambda_{\text{L}}, R)$ is the atmospheric volume backscatter coefficient, $c$ is the speed of light, $\tau_{\text{L}}$ is the duration of the laser pulse and $k(\lambda_{\text{L}}, R)$ is the atmospheric extinction coefficient. Furthermore, the parameter $\tau =$ $\int_0^R k(\lambda_L, R)\, dR$ defines the "optical thickness".

As is known, the atmospheric volume backscatter coefficient $\beta$ and the atmospheric extinction coefficient $k$ are optical parameters related to the medium that has caused the backscattering, i.e. related to the target 12. In particular, when the wavelength $\lambda_{\text{L}}$ of the light beam striking the target coincides with one of the absorption lines of the chemical substances that constitute the target 12, the light beam is attenuated and the back-scattered radiation decreases; consequently, the signal measured by the photodetector module 8 is of lower intensity when the light beam traverses areas where the density of the substance under consideration is greater.

Consequently, by having the respective values of the atmospheric volume backscatter coefficient $\beta$ and the atmospheric extinction coefficient $k$ (as a function of the wavelength $\lambda_{\text{L}}$ to which the laser source 2 is tuned) for various substances, it is possible to obtain physical-chemical information on the substances forming the target 12 through the LIDAR equation (1).

The impact that the accuracy with which parameters $\beta$ and $k$ are known has on the accuracy of the LIDAR measurements is therefore obvious. As better explained below, the aforementioned parameters can be accurately obtained by means of a calibration system according to one aspect of the present invention.

The DIAL measuring technique is summarized below, with reference to Figure 1. The LIDAR system 1 of Figure 1 can also be used to implement the DIAL measuring technique, on condition that the electronic control unit 10 is configured to control the laser source 2 and to process the data received by the photodetector module 8 as described below. Consequently, hereinafter the LIDAR system 1 of Figure 1 will also be referred to as a DIAL system 1 or generically as a LIDAR/DIAL system 1.

The DIAL technique envisages sending a first laser beam having a first wavelength $\lambda_{\text{ON}}$ and a second laser beam having a second wavelength $\lambda_{\text{OFF}}$, different from the first wavelength $\lambda_{\text{ON}}$, into the volume under consideration.

In particular, the first wavelength $\lambda_{\text{ON}}$ coincides with an absorption line of a substance (an atom or a molecule) that it is intended to detect in the target 12, while the second wavelength $\lambda_{\text{OFF}}$ does not coincide with an absorption line of the substance that it is intended to detect in the target 12.

Consequently, the photodetector module 8 receives a first optical power $P_{\text{ON}}$ related to the back-scattered radiation corresponding to the first laser beam, and a second optical power $P_{\text{OFF}}$ related to the back-scattered radiation corresponding to the second laser beam, where the first and the second optical powers $P_{\text{ON}}$ and $P_{\text{OFF}}$ depend on the optical parameters of the substance as described by the LIDAR equation (1):

$$P_{\text{ON}}(\lambda_{\text{ON}}, R) = P_L \xi(\lambda_{\text{ON}}) \xi(R) \frac{A_0}{R^2} \beta(\lambda_{\text{ON}}, R) \frac{c\tau_L}{2} \exp\left[-2 \int_0^R k(\lambda_{\text{ON}}, R)\, dR\right] \qquad (2)$$

$$P_{\text{OFF}}(\lambda_{\text{OFF}}, R) = P_L \xi(\lambda_{\text{OFF}}) \xi(R) \frac{A_0}{R^2} \beta(\lambda_{\text{OFF}}, R) \frac{c\tau_L}{2} \exp\left[-2 \int_0^R k(\lambda_{\text{OFF}}, R)\, dR\right] \quad (3)$$

In a first application of the DIAL technique, the target 12 is a topographic target 12 arranged at distance $R_{\text{T}}$ from the laser source 2; in this case, it is possible to obtain a mean concentration $\overline{N}$ of the substance under consideration in a region interposed between the laser source 2 and the topographic target 12. In this first application of the DIAL technique, the signal received by the photodetector module 8 is the radiation reflected by the topographic target 12.

In this case, in a manner which is in itself known, it is possible to demonstrate that the mean concentration $\overline{N}$ can be calculated starting from the received optical powers $P_{ON}$ and $P_{OFF}$, as described by the following equation:

$$\overline{N} = \frac{1}{2[\alpha_{ON}(\lambda_{ON}) - \alpha_{OFF}(\lambda_{OFF})]\Delta R} \left\{ \ln \left[ \frac{P_{OFF}(\lambda_{OFF}, R_T)}{P_{ON}(\lambda_{ON}, R_T)} \right] \right\} \tag{4}$$

where $\Delta R$ is the distance travelled by the laser beam to reach the topographic target 12 and then reach the photodetector module 8 after being reflected by the topographic target 12, and consequently, $\Delta R \approx 2R_T$; $\alpha_{ON}(\lambda_{ON})$ and $\alpha_{OFF}(\lambda_{OFF})$ are the absorption cross-sections $\alpha$ of the substance under consideration for the first wavelength $\lambda_{ON}$ and for the second wavelength $\lambda_{OFF}$, respectively.

In a second application of the DIAL technique, a topographic target is not used; in this second application, the target 12 is a gas or particulate dispersed in the atmosphere, and the signal received by the photodetector module 8 is the back-scattered radiation from the gas or particulate; given that this signal is distinctly weaker than the reflected signal measured in the first application of the DIAL technique, it enables obtaining information on the concentration of the atoms or molecules that form the substance under consideration with higher spatial resolution, which depends on the characteristics of the system used. In particular, it is possible to obtain the concentration $N$ of the substance under consideration as a function of the distance $R$ from the DIAL system 1, starting from the received optical powers $P_{ON}$ and $P_{OFF}$, by means of the following equation:

$$N(R) = -\frac{1}{2\Delta\alpha} \frac{\partial}{\partial R} \left[ \ln \frac{P_{ON}(R)}{P_{OFF}(R)} \right] \tag{5}$$

where

$$\Delta\alpha = \alpha_{ON}(\lambda_{ON}) - \alpha_{OFF}(\lambda_{OFF}).$$

As is known, the absorption cross-section $\alpha(\lambda_L)$ is an optical parameter related to the medium that has caused the backscattering, i.e. the target 12. In particular, having the respective values of the absorption cross-section (as a function of the wavelength $\lambda_L$ to which the laser source 2 is tuned) for various substances, enables obtaining physical-chemical information on the substances forming the target 12, by means of equations (4) and (5).

The impact of the accuracy with which the profile of $\alpha(\lambda_L)$ is known on the accuracy of DIAL measurements is therefore obvious. As better explained below, the absorption cross-section, represented by the absorption coefficient $\alpha(\lambda_L)$, can be accurately obtained by means of a calibration system according to one embodiment of the present invention.

Another reason for which it is important to know with precision the absorption cross-section $\alpha(\lambda_L)$ as a function of the wavelength for various substances to be studied is because the sensitivity $N_{min}$ of the LIDAR/DIAL system 1 depends on it.

In particular, the sensitivity $N_{min}$ of the LIDAR/DIAL system 1 is defined in relation to a substance as the minimum concentration of said substance that the LIDAR/DIAL system 1 is able to detect.

In particular, the sensitivity $N_{min}$ is correlated to the parameter $\Delta P/P$, i.e. the minimum percentage variation of power received between $P_{ON}$ and $P_{OFF}$, due, for example, to variations in atmospheric composition along the path between the LIDAR/DIAL system 1 and the target 12, or to random fluctuations generated by turbulence or atmospheric disturbances.

In a manner in itself known, it is possible to demonstrate that in the case where parameter $\Delta P/P$ is limited by the noise of the photodetector module 8, i.e. generally for distances $R$ less than 5 km, the sensitivity $N_{min}$ can be calculated using the following equation:

$$N_{min} = \frac{\Delta P}{P} \frac{1}{2\Delta\alpha R} \tag{6}$$

Otherwise, for distances R greater than 5 km, the sensitivity $N_{min}$ is more accurately calculated using the following equation:

$$N_{\min} = \frac{1}{\Delta\alpha}\left[\frac{5\times10^3(\Delta P/P)}{R} + CR^{-1/12}\right] \tag{7}$$

where C is an experimentally determined constant, for example, equal to 79, for targets located at a distance R of approximately 5 km.

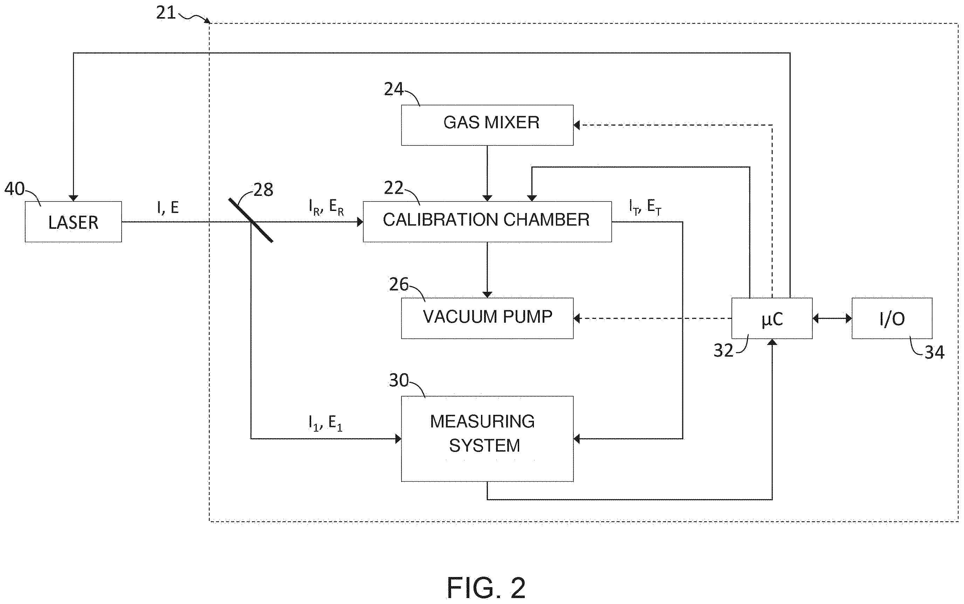

Figure 2 schematically shows, by means of a block diagram, a calibration system 21 according to one aspect of the present invention.

The calibration system 21 comprises a calibration chamber 22, a gas mixer 24, a vacuum pump 26, a beam splitter 28, a measuring system 30, a controller 32 and an input/output device 34. Optionally, the calibration system 21 may comprise a memory and a communication module (not shown in Figure 2).

The calibration system 21 is configured to calibrate a measuring instrument comprising a laser source 40.

As better explained below, the calibration chamber 22 is a chamber, for example, with a cylindrical or parallelepiped shape, which can be hermetically sealed.

The calibration chamber 22 is configured so that it can contain a gas or particulate for which it is wished to measure the optical parameters; the calibration chamber 22 can then be hermetically sealed. Such optical parameters include, for example, the absorption cross-section $\alpha(\lambda_L)$, the atmospheric volume backscatter coefficient $\beta(\lambda_L)$ and the atmospheric extinction coefficient $k(\lambda_L)$ measured referring to technical characteristics unique to the laser source 40 and to its wavelength $\lambda_L$.

The gas mixer 24 is configured to introduce gases or particulates for which it is wished to measure the optical parameters inside the calibration chamber 22. The gases or particulates are introduced in a controlled manner by means of flowmeters comprising pressure and temperature sensors, not shown in Figure 2.

By way of non-limitative example, the gas mixer 24 can introduce into the calibration chamber 22 one or more gases chosen from carbon monoxide (CO), ammonia, nitrogen oxides ($NO_x$), sulphur oxides ($SO_x$), gaseous mercury (Hg), water vapour, NBC gases such as nerve gases or toxic gases in general, volatile organic compounds (VOC), ozone, polycyclic aromatic hydrocarbons, odorous molecules, drugs that emit gaseous molecules into the atmosphere and combustion-derived products.

According to one aspect of the present invention, the volume V of the calibration chamber 22 can be adjusted automatically or manually by an operator of the calibration system 21, so as to control the concentration of gas or particulate introduced by the gas mixer 24 within a preferred range.

In particular, as better described hereinafter, the volume V is defined by the space inside the calibration chamber 22, delimited by the walls of the calibration chamber 22 and by a first and a second optical window, not shown in Figure 2. These optical windows are configured to enable, at the same time, hermetic sealing of the calibration chamber 22 and the passage of electromagnetic radiation, and are respectively arranged at an inlet and an outlet of the calibration chamber 22 (in terms of the passage of electromagnetic radiation).

In particular, the volume V of the calibration chamber 22 can be adjusted by modifying a length L thereof, measured along a main direction of extension of the calibration chamber 22, said main direction of extension being parallel to a direction of propagation of the laser beam through the calibration chamber 22.

The vacuum pump 26 is, for example, a rotary pump, for example a turbomolecular pump, configured to obtain and maintain the vacuum in the calibration chamber 22. In particular, the calibration chamber 22 and the vacuum pump 26 are designed so as to be able to maintain high vacuum conditions inside the calibration chamber 22, corresponding to an internal pressure of less than 0.1 Pa. The strong sealing pressure of the calibration chamber 22 enables avoiding chemical-physical reactions of the gas with undesired impurities inside the calibration chamber 22, and to even operate with gases that are highly toxic or lethal for the operator of the calibration system 21.

The calibration chamber 22 and the beam splitter 28 are arranged so as to be aligned with the laser beam emitted by the laser source 40. Furthermore, according to one aspect of the present invention, the alignment of the calibration chamber 22 and the beam splitter 28 with respect to the laser beam can be monitored and corrected automatically.

The beam splitter 28 is made of a material chosen according to the range of wavelengths in which the laser source 40 can be tuned, or according to a range of wavelengths in which it is intended to use the laser source 40. For example, for a $CO_2$ TEA (Transversely Excited Atmosphere) laser, the beam splitter 28 could be zinc selenide (ZnSe).

The measuring system 30 is configured to measure the electromagnetic radiation intensity and/or energy. For example, the measuring system 30 comprises one or more instruments to measure electromagnetic radiation intensity, such as, for example, photodetectors, photomultipliers or spectrometers (not shown in Figure 2). For example, the measuring system 30 further comprises one or more instruments (not shown in Figure 2) to measure electromagnetic radiation energy, such as, for example, joulemeters.

The controller 32 is configured to receive the measured signals from the measuring system 30 and process said signals to calculate the optical parameters of interest $\alpha(\lambda_L)$, $\beta(\lambda_L)$ and $k(\lambda_L)$ as specified below.

The controller 32 is further configured to control the adjustment of the volume V of the calibration chamber 22 and to control the laser source 40 so as to implement a calibration method according to one aspect of the present invention.

Optionally, the controller 32 is also coupled to the gas mixer 24 and to the vacuum pump 26 so that it can control them to implement steps of a calibration method according to one aspect of the present invention.

The input/output device 34, for example comprising a keyboard and a display, enables the operator of the calibration system 21 to send input data to the controller 32 and receive output data from the controller 32. For example, the operator can request an adjustment of the volume $V$ of the calibration chamber 22; for example, the operator can start or interrupt the calibration method; for example, the operator can modify parameters of the calibration method; for example, the operator can display the results of the calibration method, such as, for example, the measured optical parameters, and save them in a memory (not shown in Figure 2) of the calibration system 21.

A calculation procedure for the volume V of the calibration chamber 22 to which the calibration chamber 22 should preferably be set in order to proceed with the calculation of the optical parameters of a gas is described below.

As stated, the calibration system 21 is configured so as to enable the calibration of the laser source 40 in relation to a vast range of gases, having different physical-chemical properties and used as samples of an atmospheric or aqueous volume to be characterized. The calibration system 21 is configured to be able to calibrate the laser source 40 for gases having significantly different optical parameters from one another; preferably, the calibration system 21 is adaptable so that it can calibrate the laser source 40 both for highly absorbing gases and for weakly absorbing gases. Furthermore, for safety reasons, it is preferable to work with low concentrations in cases where the gas or particulate to characterize is toxic or lethal for the operator of the calibration system 21. Furthermore, the concentration of the gas sample must, in any case, be greater than a minimum threshold of detectability, i.e. the sensitivity of the measuring instrument comprising the laser source 40.

Consequently, it is preferable to be able to control the concentration of the gas to inject into the calibration chamber 22 according to the type of gas. For example, the concentration of the gas can be controlled by adjusting physical parameters of the gas to be injected, such as, for example, the pressure and temperature; furthermore, it is possible to adjust the amount of gas injected. According to one aspect of the present invention, the concentration of the gas can also be controlled by adjusting the volume V of the calibration chamber 22; a further degree of freedom in adjusting the concentration of the gas is therefore obtained. The volume V to which the calibration chamber 22 is preferably set for proceeding with the calculation of the optical parameters of the gas is therefore calculated by setting a desired gas concentration and using the ideal gas law:

$$V = \frac{nRT_{\text{gas}}}{P_{\text{gas}}} \qquad (8)$$

where n is the number of moles of gas to be injected, and R is the perfect gas constant, while $P_{\text{gas}}$ and $T_{\text{gas}}$ are respectively the pressure and the temperature of the gas, measured by pressure and temperature sensors coupled to the flowmeters between the gas mixer 24 and the calibration chamber 22.

A calculation procedure for the absorption cross-section $\alpha(\lambda_L)$ that can be used in solving the DIAL equations (4) and (5) is described below.

Referring to Figure 2, the laser source 40 emits a laser beam having intensity I and wavelength $\lambda_L$. The laser beam strikes the beam splitter 28, having reflectance $\varepsilon$, so that a first portion $I_1 = \varepsilon I$ of the laser beam's intensity is received and measured, for example, by a first photodetector (not shown) of the measuring system 30, while the remaining portion $I_R = (1-\varepsilon)I$ is received by the calibration chamber 22. The laser beam received by the calibration chamber 22, having intensity $I_R$ at the entrance of the calibration chamber 22, traverses the calibration chamber 22 and is attenuated according to the content of the calibration chamber 22, resulting in an output intensity $I_T$, received and measured, for example, by a second photodetector (not shown) of the measuring system 30. In the following, reference will be made to the intensity $I_R$ received at the entrance of the calibration chamber 22 using the term "input intensity" $I_R$.

In a first step of the calculation procedure of the absorption cross-section $\alpha(\lambda_L)$, the calibration chamber 22 is under vacuum conditions, and so the only attenuation to which the laser beam is subjected while passing through the calibration chamber 22 is due to the optical input and output windows, which contribute to said attenuation with a parameter $A_f(X_L)$; consequently, in this first step, the following relation applies:

$$\left. \frac{I_T}{I_R} \right|_{CV} = A_f(\lambda_L) \qquad (9)$$

where the subscript "CV" of the first item of equation (9) means that the measurements of the output intensity $I_T$ and input intensity $I_R$, and consequently their ratio, have been carried out with the calibration chamber 22 empty.

In a second step of the calculation procedure of the absorption cross-section $\alpha(\lambda_L)$, the calibration chamber 22 has been filled with the gas for which it is wished to calculate the absorption cross-section $\alpha(\lambda_L)$; the gas contributes to the attenuation of the laser beam with a factor $A_g(\lambda_L)$, dependent on the optical parameters of the gas; consequently, in this second step, the following relation applies:

$$\left.\frac{I_T}{I_R}\right|_{CP} = A_f(\lambda_L)A_g(\lambda_L) \qquad (10)$$

where the subscript "CP" of the first item of equation (10) means that the measurements of the output intensity $I_T$ and input intensity $I_R$, and consequently their ratio, have been carried out with the calibration chamber 22 full.

Once the ratios of the output intensity $I_T$ and input intensity $I_R$ for both full-cell and empty-cell conditions have been calculated, it is possible to perform the relation below so as to eliminate the influence of the optical windows on the attenuation and isolate the attenuation factor $A_g(\lambda_L)$ due to the gas:

$$A_g(\lambda_L) = \left.\frac{I_T}{I_R}\right|_{CP} \Big/ \left.\frac{I_T}{I_R}\right|_{CV} \qquad (11)$$

Once parameter $A_g(\lambda_L)$ is obtained, it is possible to calculate the absorption cross-section $\alpha(\lambda_L)$ starting from the following equation:

$$A_g(\lambda_L) = \exp(-\alpha(\lambda_L)pL) \qquad (12)$$

where $p$ id the partial pressure of the gas, measured in atm, and $L$ is the length of the calibration chamber 22, as previously described.

By inverting equation (12), the absorption cross-section $\alpha(\lambda_L)$ is obtained:

$$\alpha(\lambda_L) = \frac{1}{pL}\ln\frac{1}{A_g(\lambda_L)} \qquad (13)$$

A calculation procedure for the atmospheric volume backscatter coefficient $\beta(\lambda_L)$ and the atmospheric extinction coefficient $k(\lambda_L)$, which can be used in solving the LIDAR equation (1), is described below.

Referring to Figure 2, the laser source 40 emits a laser beam having energy $E$ and wavelength $\lambda_L$. The laser beam strikes the beam splitter 28 having reflectance $\varepsilon$, so that a first portion $E_1 = \varepsilon E$ of the laser beam's energy is received and measured, for example by a first joulemeter (not shown) of the measuring system 30, while the remaining portion $E_R = (1-\varepsilon)E$ is received by the calibration chamber 22.

The laser beam received by the calibration chamber 22, having energy $E_R$ at the entrance of the calibration chamber 22, traverses the calibration chamber 22 and is attenuated according to the content of the calibration chamber 22, resulting in an output energy $E_T$, received and measured, for example, by a second joulemeter (not shown) of the measuring system 30. In the following, reference will also be made to the energy $E_R$ at the entrance of the calibration chamber 22 using the term "input energy $E_R$".

In a first step of the calculation procedure of the atmospheric volume backscatter coefficient $\beta(\lambda_L)$ and the atmospheric extinction coefficient $k(\lambda_L)$, the calibration chamber 22 is under vacuum conditions; it is therefore possible to calculate the parameter $E_T/E_R|_{CV}$, corresponding to the ratio between the output energy $E_T$ and the input energy $E_R$ when the calibration chamber 22 is under vacuum conditions.

In a second step of the calculation procedure of the atmospheric volume backscatter coefficient $\beta(\lambda_L)$ and the atmospheric extinction coefficient $k(\lambda_L)$, the calibration chamber 22 has been filled with the gas sample under consideration; it is therefore possible to calculate the parameter $E_T/E_R|_{CP}$, corresponding to the ratio between the output energy $E_T$ and the input energy $E_R$ when the gas sample under consideration is present in the calibration chamber 22.

Once the ratios of the output energy $E_T$ and the input energy $E_R$ for both full-cell and empty-cell conditions have been calculated, it is possible to calculate the atmospheric transmittance T of the gas according to the following equation:

$$T(\lambda_{\mathrm{L}}) = \left.\frac{E_{\mathrm{T}}}{E_{\mathrm{R}}}\right|_{\mathrm{CP}} \Big/ \left.\frac{E_{\mathrm{T}}}{E_{\mathrm{R}}}\right|_{\mathrm{CV}} \tag{14}$$

Once the atmospheric transmittance $T(\lambda_{\mathrm{L}})$ is obtained, it is possible to calculate the atmospheric extinction coefficient $k(\lambda_{\mathrm{L}})$ according to the following equation:

$$k(\lambda_{\mathrm{L}}) = \frac{1}{L}\ln\left(\frac{1}{T(\lambda_{\mathrm{L}})}\right) \tag{15}$$

Furthermore, once the atmospheric transmittance $T(\lambda_{\mathrm{L}})$ is obtained, it is also possible to calculate the atmospheric volume backscatter coefficient $\beta(\lambda_{\mathrm{L}})$ according to the following equation:

$$\beta(\lambda_{\mathrm{L}}) = \sqrt{\frac{P(\lambda_{\mathrm{L}})}{T}} \tag{16}$$

where $P(\lambda_{\mathrm{L}})$ is the power received by the measuring system 30.

It is therefore possible, using the calibration chamber 22 and equations (13), (15) and (16), to accurately calculate the optical parameters necessary for solving the LIDAR and DIAL equations (1), (4) and (5).

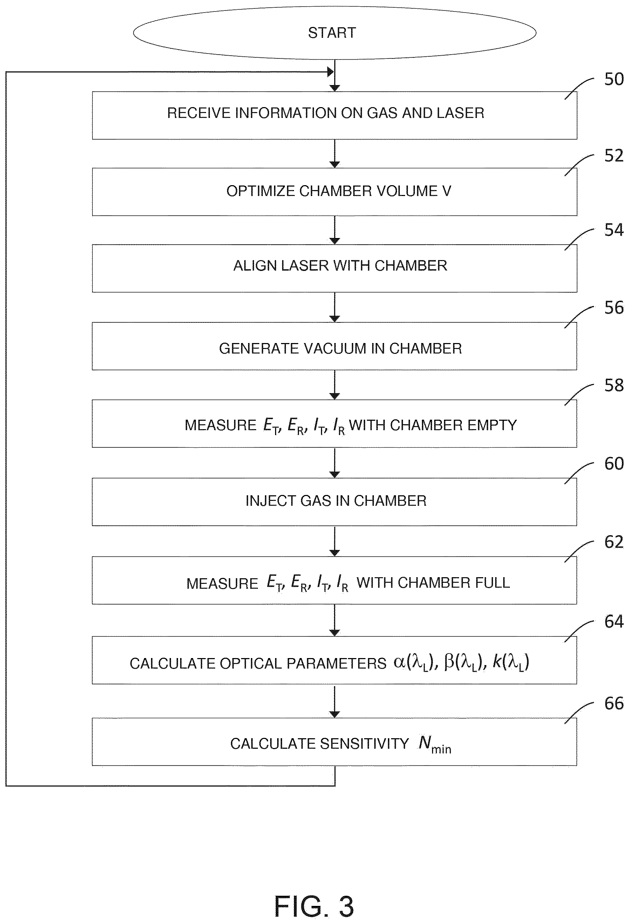

Figure 3 schematically shows, by means of a block diagram, a calibration method implemented by the calibration system 21 of Figure 2. In particular, the calibration method of Figure 3 enables calibrating a measuring instrument comprising a laser source (for example, the laser source 40 of Figure 2), said measuring instrument being configured to characterize a gas or particulate, said calibration method having the purpose of calculating optical parameters of said gas or particulate with a power profile relation and other technical characteristics unique to the laser source. In the following, by way of non-limitative example, reference will be made to calibration for gas measurements; the same calibration method can also be applied with regard to particulate measurements.

With combined reference to Figures 2 and 3, the calibration method first comprises the step 50 of receiving data indicative of the properties of the laser source 40 and of the gas for which it is wished to perform the calibration.

In particular, in step 50, the controller 32 receives data indicative of one or more wavelengths $\lambda_{\mathrm{L}}$ at which it is intended to tune (and therefore calibrate) the laser source 40.

Furthermore, in step 50, the controller 32 receives data indicative of type of gas for which it is wished to perform the calibration, so that specific parameters of the type of gas can be associated in subsequent steps of the calibration method.

Step 50 starts, for example, following a calibration request by an operator interfacing with the calibration system 21 via the input/output device 34. For example, the input/output device 34 allows the operator to specify the type of gas to be calibrated and one or more wavelengths $\lambda_{\mathrm{L}}$ with which to carry out the calibration.

Following step 50, control passes to the step 52 of optimizing the volume V of the calibration chamber 22 based on the type of gas received in step 50.

In particular, in step 52, the controller 32 calculates the ideal volume $V$ to which to set the calibration chamber 22 for proceeding with the measurements of the relevant optical parameters for the calibration, using the above-indicated equation (8). In detail, in step 52, the controller 32 receives data indicative of the pressure $P_{\mathrm{gas}}$ and temperature $T_{\mathrm{gas}}$ of the gas, measured by the pressure sensor and the temperature sensor, respectively.

Furthermore, the controller 32 selects the number of moles n to be injected in the calibration chamber 22, based on data indicative of the type of gas received in step 50. For example, each type of gas can be associated with a number of moles $n$, and said association can be stored in a memory of the calibration system 21. The controller 32 then calculates the ideal volume $V$ for the calibration chamber 22 based on the number of moles $n$, so as to obtain a desired concentration $C = n/V$.

Subsequently, the volume of the calibration chamber 22 is adjusted so that it corresponds to the calculated ideal volume $V$.

In particular, in one embodiment of the calibration system 21 where the calibration chamber 22 enables adjusting a length $L$ of the calibration chamber 22, said length $L$ is adjusted so that the volume of the calibration chamber 22 corresponds to the calculated ideal volume $V$.

Preferably, the operation of adjusting the volume $V$ of the calibration chamber 22 can be performed automatically, without manual intervention by an operator, on the basis of a control signal sent by the controller 32 and by means of an actuation system not shown in Figure 2.

Following step 52, control passes to the step 54 of aligning the laser source 40 with the calibration chamber 22. In particular, in step 54, it is checked, according to techniques in themselves known, whether the laser beam emitted by the laser source 40 coincides with a longitudinal axis of the calibration chamber 22. For example, in embodiments where the calibration chamber 22 has a cylindrical shape, in step 52 it is checked whether the direction of the laser beam coincides with the axis of the cylinder. If not, the position and/or orientation of the laser source 40 and/or the calibration chamber 22 are modified so as to achieve the alignment condition. In particular, the calibration system 21 is configured so that the step 54 of aligning the laser source 40 with the calibration chamber 22 can be performed automatically, without manual intervention by an operator, on the basis of a control signal sent by the controller 32 and by means of an actuation system, not shown in Figure 2, said actuation system enabling micrometric precision in the movements of the laser source 40 and/or the calibration chamber 22 in a three-dimensional space.

Following step 54, control passes to the step 56 of generating the vacuum in the calibration chamber 22. In particular, in step 56, the vacuum pump 26 receives an electrical signal indicative of a request to generate a vacuum in the calibration chamber 22. For example, said electrical signal could be sent by the controller 32. Alternatively, said electrical signal could be sent via a switch operated by the operator of the calibration system 21.

Then, the vacuum pump 26 generates high vacuum conditions in the calibration chamber 22, lowering the pressure inside the calibration chamber 22 down to a value ranging between, for example, 0.1 Pa and 0.9 Pa, for example 0.5 Pa.

Following step 56, control passes to the step 58 of carrying out measurements with the chamber empty. In particular, in step 58, the controller 32 drives the laser source 40 so that it emits a laser beam having intensity $I$ and energy $E$, for example definable by the operator in a range of allowable values of the laser source 40 by means of the input/output device 34, at a wavelength $\lambda_L$. The laser beam strikes the beam splitter 28 so that the input intensity $I_R$ and input energy $E_R$ are sent to the calibration chamber 22, while the remaining intensity $I_1$ and energy $E_1$ are sent to the measuring system 30. As described above, the measuring system 30 measures and sends data to the controller 32 indicative of the ratio between the output intensity $I_T$ and the input intensity $I_R$, and of the ratio between the output energy $E_T$ and the input energy $E_R$. In particular, the input intensity $I_R$ and input energy $E_F$, are calculated on the basis of the intensity $I_1$ and energy $E_1$ measured by the measuring system 30.

According to one aspect of the present invention, the measurements of the ratios $I_T/I_R$ and $E_T/E_R$ are repeated for more than one laser pulse, in particular for a number of laser pulses sufficient to have a statistically significant sample, for example for a number of laser pulses ranging between 70 and 120, for example 100. Furthermore, the measurements of the ratios $I_T/I_R$ and $E_T/E_R$ are repeated for every wavelength $\lambda_L$ at which it is intended to tune the laser source 40.

As stated, the laser source 40 can be activated automatically, without manual intervention by an operator, on the basis of one or more control signals sent by the controller 32.

Following step 58, control passes to the step 60 of injecting n moles of the gas inside the calibration chamber 22. In particular, in step 60, the gas mixer 24 receives a signal indicative of the gas to be injected and a request to inject n moles of said gas into the calibration chamber 22. For example, said signal could be an electrical signal sent by the controller 32. Then, the gas mixer 24 injects n moles of the gas into the calibration chamber 22, so as to obtain the desired concentration C.

Following step 60, control passes to the step 62 of carrying out measurements with the chamber full, similarly to that described for the empty chamber measurements in step 58.

Consequently, upon completion of step 62, the controller 32 has access to parameters $I_T/I_R|_{CV}$ and $I_T/I_{R}|_{CP}$, which enable solving equation (11), and ratios $E_T/E_R|_{CV}$ and $E_T/E_R|_{CP}$, which enable solving equation (14).

Following step 62, control passes to the step 64 of calculating the absorption cross-section $\alpha(\lambda_L)$, the atmospheric volume backscatter coefficient $\beta(\lambda_L)$ and the atmospheric extinction coefficient $k(\lambda_L)$; in particular, in step 64, the controller 32 calculates parameters $\alpha(\lambda_L)$, $k(\lambda_L)$ and $\beta(\lambda_L)$ on the basis of the parameters $I_T/I_R|_{CV}$, $I_T/I_R|_{CP}$, $E_T/E_R|_{CV}$ and $E_T/E_R|_{CP}$ obtained upon completion of step 62 and solving equations (13), (15) and (16), respectively. The calculation of parameters $\alpha(\lambda_L)$, $k(\lambda_L)$ and $\beta(\lambda_L)$ is repeated for every wavelength $\lambda_L$ to which it is intended to tune the laser source 40.

Once the parameters $\alpha(\lambda_L)$, $k(\lambda_L)$ and $\beta(\lambda_L)$ have been obtained as described above, it is possible to store them in a memory (not shown in Figure 2) of the calibration system 21, display them by means of the input/output device 34 or send them to other devices by means of a communication module (not shown in Figure 2) of the calibration system 21.

In particular, parameters $\alpha(\lambda_L)$, $k(\lambda_L)$ and $\beta(\lambda_L)$ calculated in step 64 can be used by the measuring instrument comprising the laser source 40, consequently increasing the measurement accuracy of said measuring instrument.

In particular, in the case of LIDAR/DIAL systems, the applicant has verified that by applying the calibration method of Figure 3, the measurement error of the optical parameters drops to a value approximately between 5% and 10%, with respect to a range between 40% and 50% achievable using data obtained from numerical simulation and/or literature. The greater measurement accuracy of the optical parameters means greater LIDAR/DIAL measurement accuracy, as shown by equations (1), (4) and (5).

Following step 64, control passes to the step 66 of calculating the sensitivity $N_{min}$ of the measuring instrument, which in the case of LIDAR/DIAL systems depends on the absorption cross-section $\alpha(\lambda_L)$, as indicated in equations (6) and (7).

The sensitivity $N_{min}$ can be stored, displayed or transmitted to other devices in a similar manner as described for parameters $\alpha(\lambda_L)$, $k(\lambda_L)$ and $\beta(\lambda_L)$ in the description of step 64 of the method.

In particular, the memory of the calibration system 21 can be configured to store a database in which, for each type of gas taken into consideration, there are associated parameters $\alpha(\lambda_L)$, $k(\lambda_L)$, $\beta(\lambda_L)$ and $N_{min}$, classified by wavelength $\lambda_L$ and power of the laser source.

Following step 66, control returns to the step 50 of receiving data indicative of properties of the laser source 40 and of the gas for which it is wished to perform the calibration; steps 50-66 of the method can be repeated over time for the same gas and for the same laser source, so as to monitor the trend of parameters $\alpha(\lambda_L)$, $k(\lambda_L)$, $\beta(\lambda_L)$ and $N_{min}$ in real time.

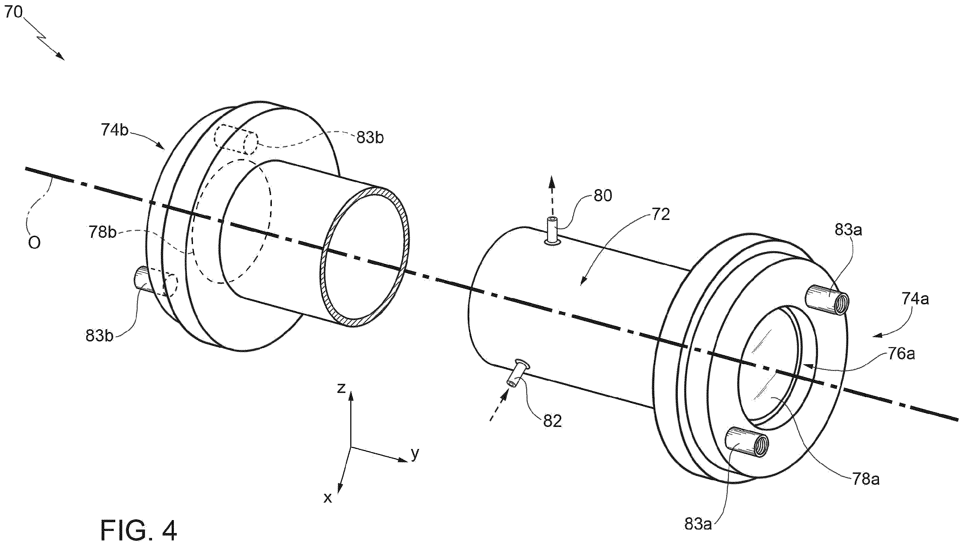

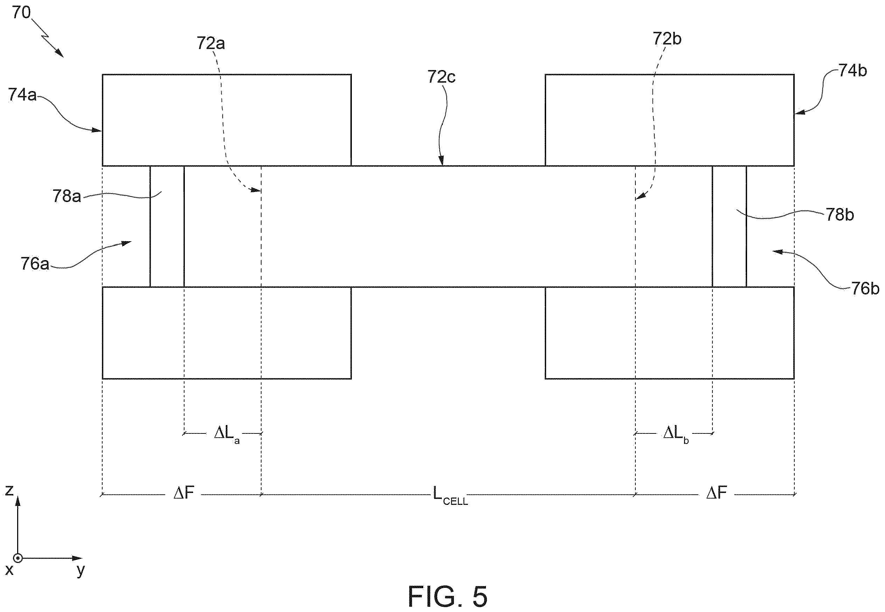

Figure 4 shows a perspective view of a portion of a calibration chamber according to one embodiment of the present invention, in a three-dimensional space defined by three Cartesian axes x, y and z. Figure 5 schematically shows a side section view on the y-z plane of said portion.

In particular, according to one aspect of the present invention, the calibration chamber 22 can have a modular structure, i.e. the calibration chamber 22 can comprise one or more unit cells having a similar structure to one another and which can be coupled so as to obtain a desired length L. In particular, Figures 4 and 5 show a unit cell 70.

In detail, the unit cell 70 comprises a tubular element 72 with a main direction of extension parallel to the y-axis. The tubular element 72 can have a circular or rectangular cross-section.

In particular, referring to Figures 4 and 5, the tubular element 72 comprises a first open face 72a and a second open face 72b, connected to each other by a side wall 72c. The side wall 72c is made of a metal material, such as, for example, stainless steel.

In the example of Figure 4, the tubular element 72 has a circular cross-section; the open faces 72a and 72b have a radius R ranging between 5 $\mu$m and 30 cm, for example 5 cm, and the side wall 72c has a length $L_{CELL}$ ranging between a few micrometres and a few metres, for example between 1 $\mu$m and 5 m; for example, if the gas sample is at a pressure of 2 kPa and has an absorption coefficient in the order of 40 (atm·cm)$^{-1}$, $L_{CELL}$ is in the order of 10 cm, for example 11.9 cm. The tubular element 72 is symmetrical with respect to an optical axis O. A laser beam with a direction of propagation parallel to the y-axis, for example aligned with optical axis O, can pass through the tubular element 72.

The unit cell 70 also comprises a first flange 74a and a second flange 74b. Each of the first and second flanges 74a and 74b is mechanically coupled in a releasable manner to the tubular element 72 at the first and the second open faces 72a and 72b, respectively. In particular, each of the first and second flanges 74a and 74b has a thickness (measured along the y-axis) such that, once mechanically coupled to the tubular element 72, it protrudes with respect to the tubular element 72 along the y-axis for a length $\Delta F$, where length $\Delta F$ ranges, for example, between 3 $\mu$m and 5 cm, for example 0.5 cm. Each of the first and second flanges 74a and 74b is made of a metal material, such as, for example, stainless steel and/or a material that does not react with the injected molecules.

The first and the second flanges 74a and 74b have a respective first and second cavity 76a and 76b. In particular, the first and the second cavities 76a and 76b extend along the entire thickness of the first and the second flanges 74a and 74b, respectively. Consequently, a laser beam with a direction of propagation parallel to the y-axis, for example aligned with the optical axis O, can pass through the first cavity 76a, the tubular element 72 and the second cavity 76b.

The first and second flanges 74a and 74b are configured to respectively house a first optical window 78a and a second optical window 78b, at the first and the second cavities 76a and 76b, respectively.

Each of the first and the second optical windows 78a and 78b has a shape similar to the cross-section of the tubular element 72, and has dimensions such as to fluidically decouple the tubular element 72 from the environment outside of the unit cell 70. In other words, the first and the second optical windows 78a and 78b have shapes and dimensions such as to seal the tubular element 72.

According to one aspect of the present invention, each of the first and the second optical windows 78a and 78b has a thickness (measured along the y-axis) less than the length $\Delta F$ by which the first and the second flanges 74a and 74b protrude with respect to the first and the second open faces 72a and 72b of the tubular element 72. For example, the thickness of each of the first and second the optical windows 78a and 78b ranges between 0.1 $\mu$m and 1 $\mu$m, for example 0.2 $\mu$m. Furthermore, each of the first and the second optical windows 78a and 78b can be housed in different positions inside the respective cavities 76a and 76b, so as to adjust a distance $\Delta L_a$ (along the y-axis) between the first optical window 78a and the first open face 72a, and a distance $\Delta L_b$ (along the y-axis) between the second optical window 78b and the second open face 72b. In the following, reference will be made to the case where said distances are equal ($\Delta L_a = \Delta L_b = \Delta L$), although in general, $\Delta L_a$ and $\Delta L_b$ could be different. In general, the distances $\Delta L_a$ and $\Delta L_b$ range, for example, between 0.1 $\mu$m and 0.5 $\mu$m, for example both equal to $\Delta L = 0.4$ $\mu$m. In this way, it is possible to adjust the length of the calibration chamber 22 with sub-micrometric precision.

Each of the first and the second optical windows 78a and 78b is made of material designed to hermetically seal the tubular element 72, while at the same time allowing the passage of electromagnetic radiation. Consequently, the material of the first and the second optical windows 78a and 78b is chosen according to the characteristics of the laser source that it is intended to be used, in a manner which is in itself known for an expert in the technical field of reference. For example, each of the first and the second optical windows 78a and 78b is made of high-purity fused silica; in addition, for example, each of the first and second optical windows 78a and 78b can have a coating adapted to modify the transmission properties as a function of the wavelength. Consequently, a laser beam with a direction of propagation parallel to the y-axis, for example aligned with the optical axis O, can pass through the first optical window 78a, the first cavity 76a, the tubular element 72, the second cavity 76b and the second optical window 78b.

Furthermore, the side wall 72c of the tubular element 72 has an inlet 80 through which it is possible to inject a gas (step 60 of the method of Figure 3), and an outlet 82 through which to generate the vacuum (step 56 of the method of Figure 3) in the tubular element 72, hermetically sealed at its ends by means of the first and the second optical windows 78a and 78b.

The calibration chamber 22 may comprise a single unit cell 70. In this case, the length $L$ of the calibration chamber 22 is given by the following relation:

$$L = L_{\text{CELL}} + 2\Delta L \qquad\qquad (17)$$

Consequently, in the case where the calibration chamber 22 comprises a single unit cell 70, the step of optimizing the volume $V$ of the calibration chamber 22 (step 52 of the method of Figure 3) comprises adjusting the position of the optical windows 78a and 78b inside the cavity of the respective flange 74a and 74b, and/or selecting a tubular element 72 of different length $L_{\text{CELL}}$. For example, in successive iterations of the calibration method of Figure 3, it is possible to replace the tubular element 72 with another tubular element of different length, on the basis of information on the gas received in step 50 of the method.

According to one aspect of the present invention, one unit cell 70 can be mechanically coupled to another unit cell, so as to increase the length L of the calibration chamber 22. For example, two unit cells can be mechanically coupled by coupling means of a releasable type. For example, said coupling means of a releasable type could comprise, referring to Figure 4, a first plurality of threaded holes 83a and a second plurality of threaded holes 83b. In particular, the first and the second flanges 74a and 74b have a first plurality of threaded holes 83a and a second plurality of threaded holes 83b, respectively. For example, each of the first and the second pluralities of threaded holes 83a, 83b comprises two threaded holes arranged symmetrically with respect to the optical axis O. In other embodiments, the number of threaded holes could be different.

In a manner in itself known and obvious for an expert in the technical field of reference, the shape, dimensions and arrangement of the first and the second pluralities of threaded holes 83a, 83b are designed so that each of the holes of the first plurality of threaded holes 83a of a first unit cell can be superimposed on a respective hole of the second plurality of threaded holes 83b of a second unit cell, by placing the first flange 74a of the first unit cell in contact and in alignment with second flange 74b of the second unit cell, such as to enable mechanical coupling between the first unit cell and the second unit cell by means of grub screws. In other embodiments, coupling means of a releasable type between two unit cells could be of a different type.

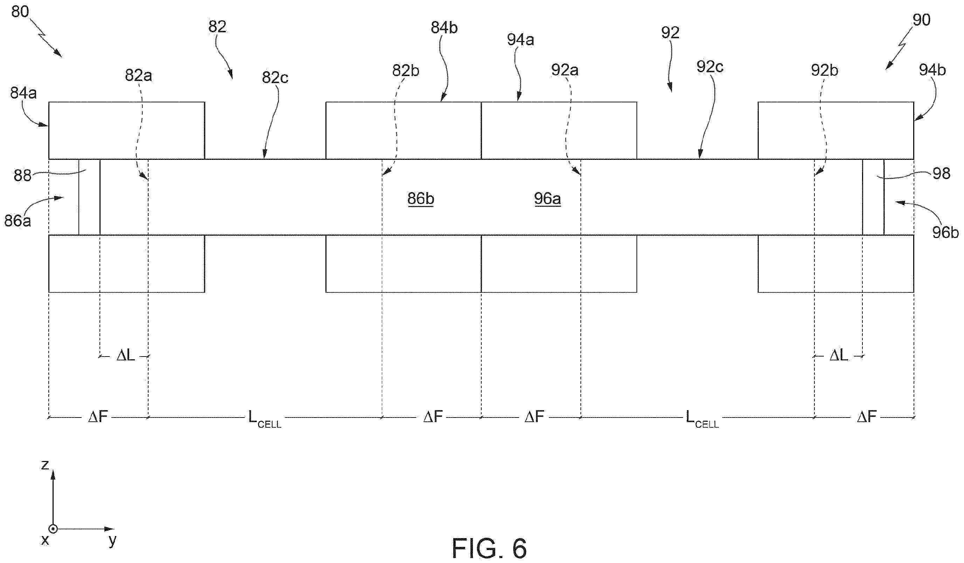

Figure 6 schematically shows a side section view on the y-z plane of a portion of a calibration chamber according to another aspect of the present invention.

In particular, the calibration chamber of Figure 6 differs from the calibration chamber of Figure 5 in that it comprises two unit cells assembled together so as to increase the length L of the calibration chamber.

In detail, the calibration chamber of Figure 6 comprises a first unit cell 80 and a second unit cell 90.

Similarly to that described for the unit cell 70 of Figure 5, the first unit cell 80 comprises a first tubular element 82, which in turn comprises a first open face 82a and a second open face 82b, connected together by a first side wall 82c. the first tubular element 82 can have shape, dimensions and materials as described above for the tubular element 72 of Figure 4. In particular, the first tubular element 82 of Figure 6 has a length $L_{\text{CELL}}$. ranging, for example, between a few micrometres and a few metres, for example between 1 $\mu$m and 5 m; for example, if the gas sample is at a pressure of 2 kPa and has an absorption coefficient in the order of 40 (atm·cm)$^{-1}$, $L_{\text{CELL}}$ is around 10 cm, for example 11.9 cm.

The first unit cell 80 also comprises a first flange 84a and a second flange 84b. Each of the first and the second flanges 84a and 84b is mechanically coupled to the first tubular element 82 in a releasable manner at the first and the second open faces 82a and 82b, respectively. The first and the second flanges 84a and 84b can have shape, dimensions and materials as described above for the flanges 74a and 74b of the unit cell 70 of Figure 4.

In particular, each of the first and the second flanges 84a and 84b has a thickness such that, once mechanically coupled to the first tubular element 82, they protrude with respect to the first tubular element 82 along the y-axis for a length $\Delta$F, where length $\Delta$F ranges, for example, between 3 $\mu$m and 5 cm, for example 0.5 cm.

The first and the second flanges 84a and 84b have a respective first and second cavity 86a and 86b, similar to that described for the cavities 76a and 76b of the flanges 74a and 74b of the unit cell 70 of Figure 5. In particular, the first flange 84a houses a first optical window 88 in the first cavity 86a. The first optical window 88 can have shape, dimensions and materials as described for the first optical window 78a of the unit cell 70 of Figure 5. In particular, the first optical window 88 of the first unit cell 80 can be housed in different positions inside the first cavity 86a, so as to adjust the housing of the first optical window with micrometric precision, i.e. adjusting a distance ΔL (along the y-axis) between the first optical window 88 and the first open face 82a, said distance ranges, for example, between 0.1 μm and 0.5 μm, for example 0.2 μm.

In turn, the second unit cell 90 comprises a second tubular element 92; said second tubular element 92 comprises a third open face 92a and a fourth open face 92b, connected to each other by a second side wall 92c. The second tubular element 92 can have shape, dimensions and materials as described above for the tubular element 72 of Figure 4. In particular, in this example the second tubular element 92 of Figure 5 has a length $L_{CELL}$ equal to the length of the first tubular element 82. In other embodiments, the length of the second tubular element 92 could be different.

The second unit cell 90 also comprises a third flange 94a and a fourth flange 94b. Each of the third and the fourth flanges 94a and 94b is mechanically coupled to the second tubular element 92 in a releasable manner, at the third and the fourth open faces 92a and 92b, respectively. The third and the fourth flanges 94a and 94b, can have shape, dimensions and materials as described above for the flanges 74a and 74b of the unit cell 70 of Figure 4.

In particular, each of the third and the fourth flanges 94a and 94b has a thickness such that, once mechanically coupled to the second tubular element 92, they protrude with respect to the second tubular element 92 along the y-axis for a length ΔF, for example equal to the length ΔF by which the first and the second flanges 84a and 84b protrude with respect to the first tubular element 82. In other embodiments, said length ΔF could be different.

The third and the fourth flanges 94a and 94b have a respective third and fourth cavity 96a and 96b, similar to that described for the cavities 76a and 76b of the flanges 74a and 74b of the unit cell 70 of Figure 5. In particular, the fourth flange 94a houses a second optical window 98, in the fourth cavity 96b. The second optical window 98 can have shape, dimensions and materials as described for the first optical window 78a of the unit cell 70 of Figure 5. In particular, the second optical window 98 of the second unit cell 90 can be housed in different positions inside the fourth cavity 96b, so as to adjust a distance ΔL (along the y-axis) between the second optical window 98 and the fourth open face 92b; in this example, said distance ΔL between the second optical window 98 and the fourth open face 92b is equal to the distance ΔL between the first optical window 88 and the first open face 82b; in other examples, said distance could be different.

According to one aspect of the present invention, the first unit cell 80 is mechanically coupled to the second unit cell 90, so as to increase the length L of a calibration chamber comprising the first and the second unit cells 80 and 90. For example, the first and the second unit cells 80 and 90, are mechanically coupled by coupling means of a releasable type (not shown in Figure 6), for example comprising pluralities of threaded holes and grub screws similar to that described regarding the unit cell 70 of Figure 4. In other embodiments, the coupling means of a releasable type between the first and the second unit cells 80 and 90 could be of a different type. For example, said coupling means of a releasable type could comprise an O-ring, usable as a seal between the second flange 84b and the third flange 94a.

The mechanical coupling between the first and the second unit cells 80 and 90 ensures that the volume V delimited by the optical windows 88 and 98, the flanges 84a, 84b, 92a and 92b and the tubular elements 82 and 92 is hermetically sealed. Furthermore, at least one of the first side wall 82c and second side wall 92c has an inlet (not shown in Figure 6) through which it is possible to inject a gas, and an outlet (not shown in Figure 6) through which to generate the vacuum inside said volume V.

Consequently, in the embodiment of Figure 6, the length L of a calibration chamber comprising the first and the second unit cells 80 and 90 is given by the following relation:

$$L = 2L_{CELL} + 2\Delta F + 2\Delta L \qquad (18)$$

In general, it is obvious that a calibration chamber can comprise a number n of unit cells, assembled in series with one another, as in the case of Figure 6 for two unit cells; in general, two optical windows are arranged inside of two respective flanges, preferably arranged at the input and output ends of the series of unit cells.

In this case, the length L of the calibration chamber is given by the following relation:

$$L = nL_{CELL} + 2(n-1)\Delta F + 2\Delta L \qquad (19)$$

where it is assumed, by way of non-limitative example, that each unit cell has a same length $L_{CELL}$ and each flange protrudes by a same length AF.

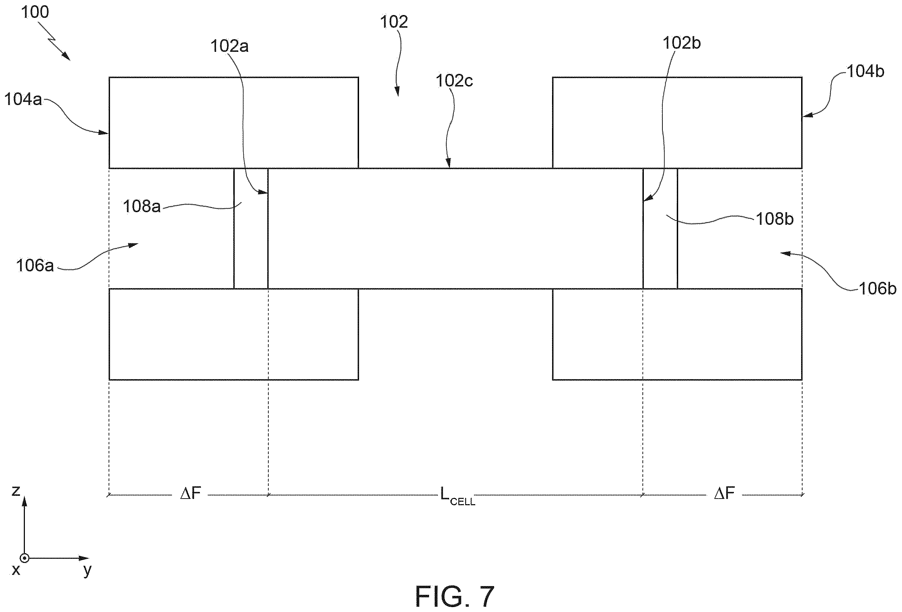

Figure 7 schematically shows a side section view on the y-z plane of a portion of a calibration chamber according to another embodiment of the present invention.

In particular, the calibration chamber of Figure 7 differs from the calibration chamber of Figure 5 in that the position of the optical windows is fixed, the optical windows being housed in a respective open face of a tubular element.

In detail, Figure 7 schematically shows a unit cell 100, comprising a tubular element 102, which in turn comprises a first open face 102a and a second open face 102b, connected to each other by a side wall 102c. The first tubular element 102 can have shape, dimensions and materials as described above for the tubular element 72 of Figure 4. In particular, the tubular element 102 of Figure 7 has a length $L_{CELL}$ ranging, for example, between a few micrometres and a few metres, for example between 1 $\mu$m and 5 m; for example, if the gas sample is at a pressure of 2 kPa and has an absorption coefficient in the order of 40 (atm·cm)$^{-1}$, $L_{CELL}$ is in the order of 10 cm, for example 11.9 cm.

The unit cell 100 also comprises a first flange 104a and a second flange 104b. Each of the first and the second flanges 104a and 104b is mechanically coupled to the tubular element 102 in a releasable manner at the first and the second open faces 102a and 102b, respectively. The first and the second flanges 104a and 104b, can have shape, dimensions and materials as described above for the flanges 74a and 74b of the unit cell 70 of Figure 4.

In particular, each of the first and the second flanges 104a and 104b has a thickness such that, once mechanically coupled to the first tubular element 102, they protrude with respect to the first tubular element 102 along the y-axis for a length $\Delta F$, where length $\Delta F$ ranges, for example, between 3 $\mu$m and 5 cm, for example 0.5 cm.

The first and the second flanges 104a and 104b have a respective first and second cavity 106a and 106b, similar to that described for the cavities 76a and 76b of the flanges 74a and 74b of the unit cell 70 of Figure 5. In particular, the first flange 104a houses a first optical window 108a in the first cavity 106a. The first optical window 108a can have shape, dimensions and materials as described for the first optical window 78a of the unit cell 70 of Figure 5. In particular, the first optical window 108a of the unit cell 100 is mechanically coupled to the tubular element 102 in a releasable manner at the first open face 102a, so as to hermetically seal the first open face 102a. Similarly, the second flange 104b houses a second optical window 108b, in the second cavity 106b. The second optical window 108b can have shape, dimensions and materials as described for the second optical window 78b of the unit cell 70 of Figure 5. In particular, the second optical window 108b of the unit cell 100 is mechanically coupled to the tubular element 102 in a releasable manner at the second open face 102b, so as to hermetically seal the second open face 102b.

Similarly to that described for the calibration chamber of Figure 6, the unit cell 100 of Figure 7 is mechanically coupled to other unit cells through coupling means of a releasable type (not shown in Figure 7), for example comprising a plurality of threaded holes and grub screws of the type previously described in relation to the unit cell 70 of Figure 4.

According to one aspect of the present invention, in the case where the calibration chamber 22 comprises a plurality of unit cells, the step of optimizing the volume V of the calibration chamber 22 (step 52 of the method of Figure 3) comprises adjusting the position of the optical windows inside the cavity of the respective flange and/or selecting tubular elements of different length and/or adding or removing unit cells to/from the calibration chamber.

Preferably, the aforementioned operations to adjust the length L of the calibration chamber can be carried out at least partly automatically. For example, each unit cell of the calibration chamber can be mechanically coupled, in a manner which is in itself known, to motorized rails or motorized linear stages or any other component for optical tables configured to enable the movement of optical components in a controlled manner. In any case, electromechanical actuators enable independently moving individual unit cells with micrometric resolution, by means of control signals sent by the controller 32.

For example, said motorized linear stages or rails could be controlled to put together or separate several unit cells according to the desired length $L$ for the calibration chamber 22 (step 52 of the calibration method in Figure 3).

For example, said motorized linear stages or rails could be configured to enable alignment between the laser beam emitted by the laser source 40 and the optical axis O of the calibration chamber 22 (step 54 of the calibration method of Figure 3).

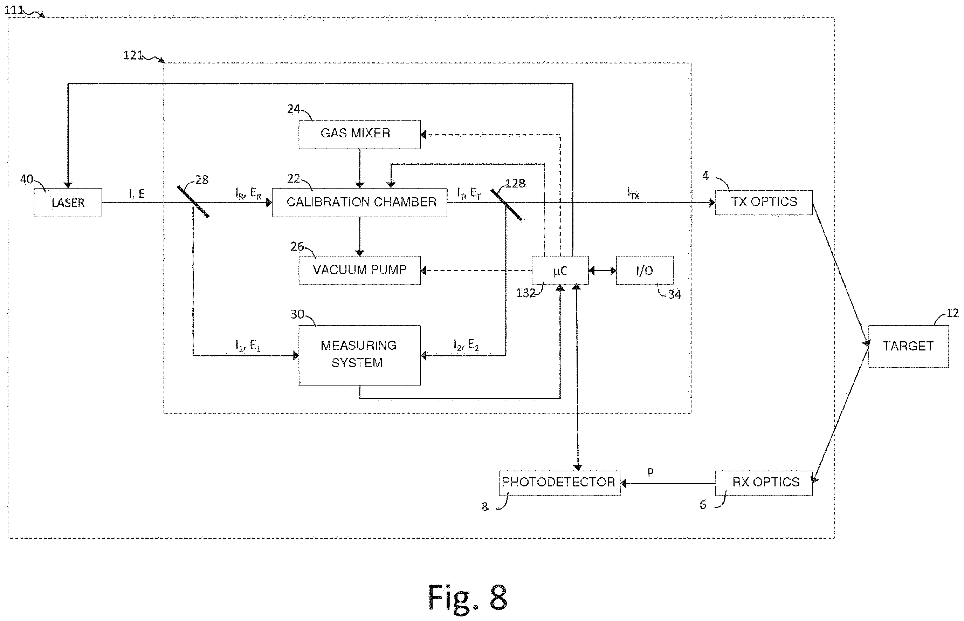

Figure 8 schematically shows, by means of a block diagram, a fire detector 111 according to one embodiment of the present invention. In particular, the fire detector 111 is a remote sensing system for gases and/or particulates and/or products of combustion. In particular, the fire detector 111 is a self-calibrating LIDAR/DIAL system.

Elements in common between the fire detector 111 of Figure 8 and the LIDAR/DIAL system 1 of Figure 1 are indicated with the same reference numerals and are not described any further. In particular, the fire detector 111 comprises a laser source 40, transmission optics 4, reception optics 6 and a photodetector module 8. Furthermore, the fire detector 111 is configured to characterize a target 12 comprising a gas produced by combustion.

The fire detector 111 of Figure 8 differs from the LIDAR/DIAL system 1 of Figure 1 in that the fire detector 111 further comprises a calibration system 121.

Elements in common between the calibration system 121 of Figure 8 and the calibration system 21 of Figure 2 are indicated with the same reference numerals and are not described any further. In particular, the calibration system 121 comprises a calibration chamber 22, a gas mixer 24, a vacuum pump 26, a first beam splitter 28, a measuring system 30 and an input/output device 34.

The calibration system 121 of Figure 8 differs from the calibration system 21 of Figure 2 due to the presence of a controller 132 that, as better described hereinafter, performs both the functions of the controller 32 of Figure 2 and the functions of the control unit 10 of Figure 1. Consequently, the controller 132 is operatively coupled not only to the calibration chamber 22, the input/output device 34, the laser source 40 and optionally to the gas mixer 24 and the measuring system 30, but is also operatively coupled to the photodetector module 8.

Furthermore, the calibration system 121 comprises a second beam splitter 128, having reflectance $\varepsilon_2$. The second beam splitter 128 is made of a material chosen according to the aforementioned considerations for the first beam splitter 28.

In particular, the second beam splitter 128 can be aligned with the laser beam emitted by the laser source 40 and passing through the calibration chamber 22. Consequently, a first portion $I_2 = \varepsilon_2 I_T$ of the intensity $I_T$ of the laser beam exiting the calibration chamber 22 during use of the fire detector 111 is received and measured by the measuring system 30, while a remaining portion $I_{TX} = (1-\varepsilon_2) I_T$ is received by the transmission optics 4.

As better explained below, unlike remote sensing systems of a known type, the calibration system 121 of the fire detector 111 enables real time calibration of the fundamental optical parameters for solving the LIDAR/DIAL equations, such as the absorption cross-section $\alpha(\lambda_L)$, the atmospheric volume backscatter coefficient $\beta(\lambda_L)$ and the atmospheric extinction coefficient $k(\lambda_L)$. Consequently, the fire detector 111 is a self-calibrating remote-sensing system that enables quicker and more accurate characterization of the target 12 with respect to remote sensing systems of a known type.

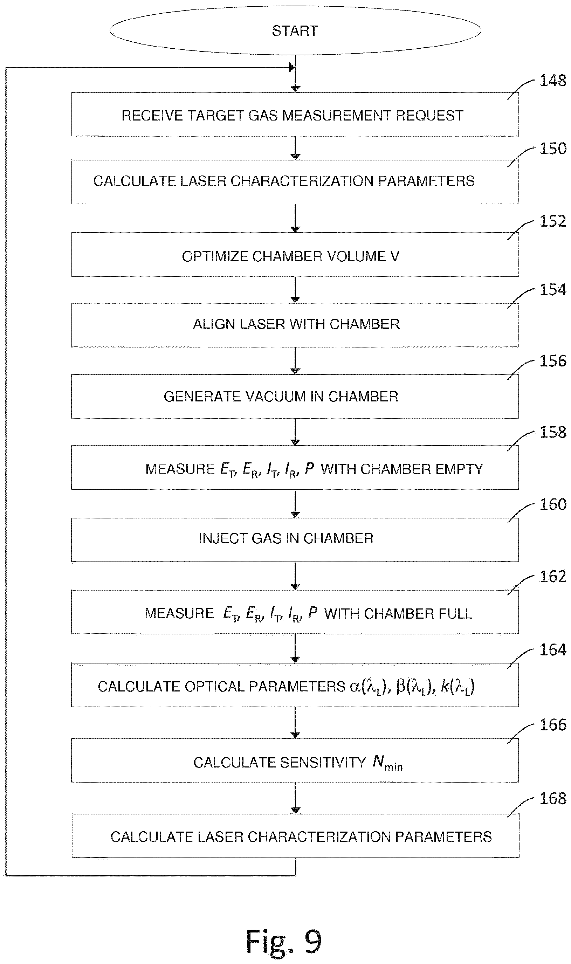

Figure 9 schematically shows, by means of a block diagram, a fire-detection method implemented by the fire detector 111 of Figure 8. In particular, the method of Figure 9 comprises a measuring cycle for the fire detector 111 of Figure 8.

Referring to Figure 9, the fire-detection method first starts with the step 148 of receiving a request to carry out remote sensing measurements of gases or particulates produced by combustion. In the following, by way of non-limitative example, reference will be made to the measurements of a gas produced by combustion; the same fire-detection method can also be applied with regard to measurements of particulates produced by combustion.

In particular, with combined reference to Figures 8 and 9, in step 148 the controller 132 receives a request to carry out measurements of the target gas. For example, the request to carry out measurements of the target gas includes data indicative of the type of target gas that is expected to be present. In particular, the target gas is a gas produced by combustion. For example, the request to carry out measurements of the target gas include data indicative of the position of the target gas. For example, the request to carry out measurements of the target gas is made by an operator, by means of the input/output device 34. The request could also be programmed in advance; for example, the request could be part of a series of requests, for example, for the purposes of characterizing different types of target gas and/or for the purposes of characterizing different areas of the space around the fire detector 111 and/or repeating characterization over time to monitor any changes.

Following step 148, control passes to the step 150 of calculating characterizing parameters of the laser source 40. In particular, in step 150 the controller 132 controls the laser source 40 so as to carry out test measurements, in itself known to an expert in the art, for the purposes of characterizing the laser source 40, in terms of parameters such as, for example, power and beam divergence. These measurements are carried out at a wavelength $\lambda_L$ chosen depending on the type of target gas and the type of measurement requested in step 148, as previously described with reference to LIDAR/DIAL measurement techniques. For example, for a LIDAR measurement, the wavelength $\lambda_L$ to which the laser source is tuned in step 150 corresponds to the absorption line $\lambda_{ON}$ of the substance forming the target gas. In another example, for a DIAL measurement, the wavelength $\lambda_L$ coincides with said wavelength $\lambda_{ON}$ in a first iteration of the method, while in a second iteration of the method it coincides with a second wavelength $\lambda_{OFF}$ taken on the tail of the bell-shaped resonance curve of said substance.

Following step 150, control passes to the step 152 of optimizing the volume V of the calibration chamber 22 based on the type of gas received in step 148, so as to obtain a desired concentration C, similarly to that described with reference to step 52 of the calibration method of Figure 3.

Following step 152, control passes to the step 154 of aligning the laser source 40 with the calibration chamber 22, similarly to that described with reference to step 54 of the calibration method of Figure 3.

Following step 154, control passes to the step 156 of generating the vacuum in the calibration chamber 22, similarly to that described with reference to step 56 of the calibration method of Figure 3.

Following step 156, control passes to the step 158 of carrying out measurements with the chamber empty. In particular, similarly to that described with reference to step 58 of the calibration method of Figure 3, in step 158 the controller 132 drives the laser source 40 so that it emits a laser beam, and the measuring system 30 measures and sends data to the controller 132 indicative of the ratio between the output intensity $I_T$ and the input intensity $I_R$, and of the ratio between the output energy $E_T$ and the input energy $E_R$ at the calibration chamber 22.

Furthermore, in step 158, concomitantly with the aforementioned measurements for the purposes of calibrating the laser source 40, the controller 132 receives data from the photodetector module 8 indicative of the optical power $P(\lambda_L)$ received by the photodetector module 8 and corresponding to the back-scattered radiation following the interaction between the target 12 and the laser beam transmitted by the transmission optics 4.

Following step 158, control passes to the step 160 of injecting n moles of the gas inside the calibration chamber 22, similarly to that described with reference to step 60 of the calibration method of Figure 3.

Following step 160, control passes to the step 162 of carrying out measurements with the chamber full. In particular, similarly to that described with reference to step 62 of the calibration method of Figure 3, in step 158 the controller 132 drives the laser source 40 so that it emits a laser beam, and the measuring system 30 measures and sends data to the controller 132 indicative of the ratio between the output intensity $I_T$ and the input intensity $I_R$, and of the ratio between the output energy $E_T$ and the input energy $E_R$ at the calibration chamber 22. Consequently, upon completion of step 62, the controller 32 has access to parameters $I_T/I_R|_{CV}$ and $I_T/I_R|_{CP}$, which enable solving equation (11), and ratios $E_T/E_R|_{CV}$ and $E_T/E_R|_{CP}$, which enable solving equation (14).

Furthermore, in step 162, concomitantly with the aforementioned measurements for the purposes of calibrating the laser source 40, the controller 132 receives data from the photodetector module 8 indicative of the optical power $P(\lambda_L)$ received by the photodetector module 8 and corresponding to the back-scattered radiation following the interaction between the target 12 and the laser beam transmitted by the transmission optics 4.

Following step 162, control passes to the step 164 of calculating the absorption cross-section $\alpha(\lambda_L)$, the atmospheric volume backscatter coefficient $\beta(\lambda_L)$ and the atmospheric extinction coefficient $k(\lambda_L)$, similarly to that described with reference to step 64 of the calibration method of Figure 3. In particular, in step 164, the controller 132 calculates the parameters $\alpha(\lambda_L)$, $k(\lambda_L)$ and $\beta(\lambda_L)$ on the basis of the parameters $I_T/I_R|_{CV}$, $I_T/I_R|_{CP}$, $E_T/E_R|_{CV}$ and $E_T/E_R|_{CP}$ obtained upon completion of step 162 and solving equations (13), (15) and (16), respectively. Furthermore, in step 164 the parameters $\alpha(\lambda_L)$, $k(\lambda_L)$ and $\beta(\lambda_L)$ are associated with the characterizing parameters of the laser source 40 obtained in step 150, and then stored in a memory, not shown, of the fire detector 111. In other words, the fire detector 111 comprises a memory in which a set of optical parameters $\alpha(\lambda_L)$, $k(\lambda_L)$ and $\beta(\lambda_L)$ suitable for solving the LIDAR/DIAL equations is associated with a set of input parameters constituted by (i) a type of gas to characterize, (ii) a wavelength and (iii) a set of characterizing parameters of a laser source at said wavelength.

Following step 164, control passes to the step 166 of calculating the sensitivity $N_{min}$ of the fire detector 111, similarly to that described with reference to step 66 of the calibration method of Figure 3. Furthermore, the sensitivity $N_{min}$ can be stored similarly to that described for the parameters $\alpha(\lambda_L)$, $k(\lambda_L)$ and $\beta(\lambda_L)$ stored in step 164.

Following step 166, control passes to the step 168 of calculating parameters characterizing the target gas 12. For example, in step 168 it is possible to calculate the mean concentration $\overline{N}$ of the target gas 12, starting from equation (4), and/or the concentration N(R) as a function of the distance R from the fire detector 111, starting from equation (5). In any case, the LIDAR equation (1) is solved in step 168 based on the optical power P received during steps 158 and 162 and based on the optical parameters calculated in step 164. It is therefore possible to increase measurement accuracy with respect to known measuring instruments of gases and particulates as the calibration is performed in the fire detector 111 in real time, being performed concomitantly with the measurements of the power $P$ and of parameters $I_T/I_R|_{CV}$, $I_T/I_R|_{CP}$, $E_T/E_R|_{CV}$ and $E_T/E_R|_{CP}$.

In particular, step 168 of the method can comprise a fire detection step, for example based on the detection of smoke generated by a forest fire with a concentration above a threshold settable by an operator of the fire detector 111.

Following step 168, control returns to the step 148 of receiving a request for remote sensing measurement of gases or particulates; for example, in the case of DIAL measurements, a measuring process according to the method of Figure 9, in which the laser source 40 is tuned to the wavelength $\lambda_{ON}$ is followed by the same measuring process in which the laser source 40 is tuned to wavelength $\lambda_{OFF}$, or vice versa.

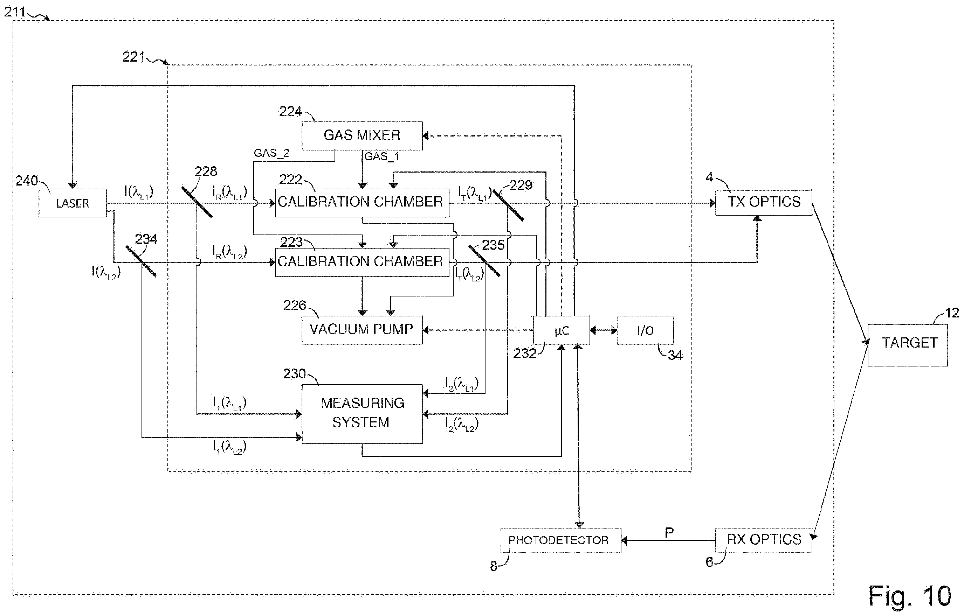

Figure 10 schematically shows, by means of a block diagram, a self-calibrating fire detector 211, according to another embodiment of the present invention. Elements in common between the fire detector 111 of Figure 8 and the fire detector 211 of Figure 10 are indicated with the same reference numerals and are not described any further.

In particular, the fire detector 211 of Figure 10 differs from the fire detector 111 of Figure 8 due to the possibility of measuring different types of gas at the same time, calibrating the respective gas samples in real time. In particular, in the example of Figure 10, the fire detector 211 is configured to enable simultaneous calibration for a first gas sample GAS_1 and for a second gas sample GAS_2, by means of a calibration system 221. In another embodiment, the number of gases for which calibration is performed could be different.

In particular, the calibration system 221 of Figure 10 differs from the calibration system 121 of Figure 8 due to the presence of a first calibration chamber 222 and a second calibration chamber 223. Similarly to that described for the calibration chamber 22 of Figure 8, the first and the second calibration chambers 222 and 223 are configured to respectively contain the first gas sample GAS_1 and the second gas sample GAS_2, injected by a gas mixer 224 controlled by a controller 232, in respective steps of a fire-detection method of the fire detector 211.

A vacuum pump 226 is configured to respectively maintain the first calibration chamber 222 and the second calibration chamber 223 in high vacuum conditions in respective steps of the fire-detection method of the fire detector 211, similarly to that described for the vacuum pump 26 in Figure 8.

The fire detector 211 comprises a laser source 240 configured to generate a first laser beam $I(\lambda_{L1})$ at a first wavelength $\lambda_{L1}$ and a second laser beam $I(\lambda_{L2})$ at a second wavelength $\lambda_{L2}$. For example, according to one aspect of the present invention, the first wavelength $\lambda_{L1}$ is chosen in relation to the first gas sample GAS_1, while the second

wavelength $\lambda_{L2}$ is chosen in relation to the second gas sample GAS_2.

The first laser beam $I(\lambda_{L1})$ strikes a first beam splitter 228, so that a portion $I_1(\lambda_{L1})$ of the first laser beam is received and measured by a measuring system 230 similarly to that described for the measuring system 30 of Figure 8, while a remaining portion $I_R(\lambda_{L1})$ is received by the first calibration chamber 222. The first laser beam $I(\lambda_{L1})$ traverses the first calibration chamber 222 and strikes a second beam splitter 229 so that a portion $I_2(\lambda_{L1})$ of the first laser beam leaving the first calibration chamber 222 is received and measured by the measuring system 230, while the remaining portion $I_T(\lambda_{L1})$ is received by the transmission optics 4.

Similarly, the second laser beam $I(\lambda_{L2})$ strikes a third beam splitter 234, so that a portion $I_1(\lambda_{L2})$ of the second laser beam is received and measured by the measuring system 230, while a remaining portion $I_R(\lambda_{L2})$ is received by the second calibration chamber 223. The second laser beam $I(\lambda_{L2})$ traverses the second calibration chamber 223 and strikes a fourth beam splitter 235, so that a portion $I_2(\lambda_{L2})$ of the second laser beam leaving the second calibration chamber 223 is received and measured by the measuring system 230, while the remaining portion $I_T(\lambda_{L2})$ is received by the transmission optics 4.

The controller 232 is configured to implement a fire-detection method for fire detector 211 similar to the fire-detection method of Figure 9 of fire detector 111 of Figure 8, but modified so as to enable simultaneous calibration for a plurality of gases, in a manner obvious for an expert in the technical field of reference.

For example, in step 150 the characterizing parameters of the laser source 240 are calculated both for the first wavelength $\lambda_{L1}$ and for the second wavelength $\lambda_{L2}$. For example, in step 152 both the volume of the first calibration chamber 222 and the volume of the second calibration chamber 223 are optimized, and so on for the successive steps of the fire-detection method of Figure 9.

From an examination of the characteristics of the present invention described and illustrated herein the advantages that can be attained therewith are obvious.

For example, the optical parameters of the substances to be investigated are accurately measured and calculated based on the real technical-constructional characteristics of the laser source, beyond the tolerances of the system modules. Unlike known calibration methods, according to the method of this disclosure it is possible to take into consideration: (i) the quality factor M2 of the laser beam sent into the atmosphere, which describes the deviation of the laser beam from an ideal Gaussian beam; (ii) the coherency of the laser beam; (iii) the exact wavelength of the laser beam, which could be different from the nominal wavelength; (iv) the exact power emitted by the laser beam, which could be different from the nominal power; and (v) the laser beam divergence. Furthermore, the aforementioned parameters are monitored during the measurement, enabling the calibration to be corrected during the measurement in the event of changes. Consequently, the measurement error drops down to 40% with respect to the error obtained when calculating optical parameters via numerical simulations and/or using optical parameters specified in scientific literature.

Use of the calibration system according to the present invention is particularly advantageous in terms of accuracy of the optical parameters measured in turbid atmospheric conditions (where the atmospheric attenuation coefficients are particularly different from those in stable atmospheric conditions), in extraterrestrial atmospheres, in the presence of walls of smoke (fires or smoke bombs), fog, sand/dust storms, etc.

Furthermore, the calibration method of the present invention enables speeding up procedure inversion in LIDAR/DIAL algorithms.

Furthermore, the calibration of the optical parameters can be carried out in real time without interrupting the main measurement being taken by means of the measuring instrument of gases and/or particulates, such as, for example, a LIDAR/DIAL system.

Furthermore, the calibration chamber according to the present invention can be applied to any instrument that carries out concentration measurements of gases and molecules present in the atmosphere and/or in stretches of water and/or spectrometry or spectrophotometry measurements, instruments for monitoring forest fires, gas leaks, pollution, etc.

Furthermore, the possibility of remotely controlling the calibration chamber with micrometric precision allows not losing optical alignment of the laser beam entering and exiting the calibration chamber, ensuring movements that are always integral with the optical axis of the calibration chamber.

Furthermore, the possibility of remotely controlling the calibration chamber allows not exposing the operator to risks due to the use of toxic and/or lethal gases.

Finally, it is clear that modifications and variants can be made regarding the invention set forth herein without departing from the scope of the present invention, as defined in the appended claims.

For example, the input/output device 34 of the calibration system 21 enables an operator of the calibration system 21 to programme in advance, for example via a computer program, all the steps 50-64 of the calibration method of Figure 3, so that they are automatically executed at a date and time set by the operator.

For example, one or more unit cells of a calibration chamber could have flanges of a different type with respect to the flanges 84a and 84b of the unit cell 70 of Figure 4; for example, flanges of a different type could include couplings for optical fibres, so as to be able to calibrate measuring systems comprising optical fibre laser sources.

It is also obvious that the length or the volume in general of the calibration chamber can be adjusted in a different way with respect to that described.

**Claims**

1. A fire detector (111; 211) of LIDAR or DIAL type, comprising:

- a laser-type optical source (40; 240);
- a calibration system (121; 221) comprising:

a controller (132; 232), operatively coupled to the optical source (40; 240) and configured to drive (158) the optical source (40; 240) in order to cause emission of a first optical signal ($I_R$) and a second optical signal ($I_R$) with a same first emission wavelength ($\lambda_L$; $\lambda_{L1}$),
a first fluid-tight chamber (22; 222), which includes a first optical window (78a; 88) and a second optical window (78b; 98) at a first distance (L) from the first optical window (78a; 88), the first chamber (22; 222) being configured to:

(i) receive, through the first optical window (78a; 88), in a first operating condition where the first chamber (22; 222) contains a first sample of product of combustion (GAS_1) at a first pressure, the first optical signal ($I_R$), and allow passage, through the second optical window (78b; 98), of a third optical signal ($I_T$) generated following an interaction ($A_g$, $A_f$) of the first optical signal ($I_R$) with the first optical window (78a; 88) and the second optical window (78b; 98) and with said first sample of product of combustion (GAS_1), the first sample of product of combustion (GAS_1) being a gas or a particulate produced by combustion, and
(ii) receive, through the first optical window (78a; 88), in a second operating condition where the pressure in the first chamber (22; 222) is a high-vacuum pressure lower than the first pressure, the second optical signal ($I_R$) generated by the optical source (40; 240), and allowing passage, through the second optical window (78b; 98), of a fourth optical signal ($I_T$) generated following an interaction ($A_f$) of the second optical signal ($I_R$) with the first optical window (78a; 88) and the second optical window (78b; 98),

a measuring system (30; 230), which is operatively coupled to the optical source (40; 240) and to the second optical window (78b; 98) and is configured to acquire the first optical signal ($I_R$), the second optical signal ($I_R$), the third optical signal ($I_T$), and the fourth optical signal ($I_T$), and to measure the intensity ($I_R$, $I_T$), respectively, of the first optical signal ($I_R$), the second optical signal ($I_R$), the third optical signal ($I_T$), and the fourth optical signal ($I_T$);
said controller (132; 232) being further configured to:

receive (158), from the measuring system (30; 230), said measured intensities ($I_R$, $I_T$),
calculate (164) a first ratio between the intensities ($I_R$, $I_T$) of the fourth optical signal ($I_T$) and the second optical signal ($I_R$), and a second ratio between the intensities ($I_R$, $I_T$) of the third optical signal ($I_T$) and the first optical signal ($I_R$), and calculate (164) the absorption cross-section ($\alpha$) of the first sample of product of combustion (GAS_1) on the basis of a ratio between the first ratio and the second ratio so as to cancel the effect of the interaction ($A_f$) between the first and the second optical signals with the first optical window (78a; 88) and the second optical window (78b; 98);
the fire detector (111; 211) further comprising:

- a transmission optics (4), configured to receive a portion ($I_{TX}$) of the fourth optical signal and transmit it towards a first product of combustion (12), the first product of combustion (12) being a gas or a particulate produced by combustion;
- a reception optics (6), configured to receive a first back-scattered signal (P) following an interaction between said portion ($I_{TX}$) of the fourth optical signal and the first product of combustion (12); and
- a photodetector module (8), configured to acquire the first back-scattered signal (P) and measure the power of the first back-scattered signal (P);

the controller (132; 232) being further configured to calculate (168) the concentration (N) of the first product of combustion (12) on the basis of the measured power of the first back-scattered signal (P) and the absorption cross-section ($\alpha$) of the first sample of product of combustion (GAS_1).

**2.** The fire detector (111; 211) according to claim 1,
wherein the controller (132; 232) is further configured to receive (150) a signal indicative of a desired concentration (*C*) for the first sample of product of combustion (GAS_1),
and wherein the first chamber (22; 222) comprises a first tubular element (82) and adjustment means (84a, 84b, 94a, 94b), configured to vary a volume (*V*) of the first chamber (22; 222) so that, in the first operating configuration, the first sample of product of combustion (GAS_1) will have the desired concentration (*C*) within said volume (*V*), said adjustment means (84a, 84b, 94a, 94b) comprising coupling means of a releasable type (83a, 83b), configured to couple the first tubular element (82) to a second tubular element (92) so that the resulting volume (*V*) of the first chamber (22; 222) will comprise the sum of the volumes of the first tubular element (82) and the second tubular element (92),
said adjustment means (84a, 84b, 94a, 94b) optionally comprising housings (86a, 86b, 96a, 96b) for releasably housing each of the first optical window (88) and the second optical window (98) at a first end (82a) of the first tubular element (82) or at a second end (82b) of the first tubular element (82), or at a first end (92a) of the second tubular element (92) or at a second end (92b) of the second tubular element (92), the volume (*V*) of the first chamber (22; 222) being delimited by the space comprised between the first optical window (88) and the second optical window (98), said housings (86a, 86b, 96a, 96b) being optionally configured to enable variation of a distance ($\Delta$L) between each respective first optical window (88) and second optical window (98) and the respective end (82a; 82b; 92a; 92b) where it is housed, so as to vary the first distance (*L*) between the first optical window (88) and the second optical window (98).

**3.** The fire detector (111; 211) according to claim 2, further comprising a motorized linear stage, wherein each one of the first and the second tubular elements (82; 92) is mechanically coupled to said motorized linear stage, and wherein the controller (132; 232) is configured to drive (152) said motorized linear stage so as to control the position of each one of the first and the second tubular elements (82; 92), enabling coupling or release of the first and the second tubular elements (82, 92).

**4.** The fire detector (111; 211) according to any one of the preceding claims,
wherein the measuring system (30; 230) is further configured to measure (158, 162) the energy ($E_R$, $E_T$), respectively, of the first optical signal ($E_R$), the second optical signal ($E_R$), the third optical signal ($E_T$), and the fourth optical signal ($E_T$), and wherein the controller (132; 232) is further configured to:

receive (158) from the measuring system (30; 230) said measured energies ($E_R$, $E_T$),
calculate (164) a third ratio between the energies ($E_R$, $E_T$) of the fourth optical signal ($E_T$) and the second optical signal ($E_R$), and a fourth ratio between the energies ($E_R$, $E_T$) of the third optical signal ($E_T$) and the first optical signal ($E_R$),
calculate (164) the atmospheric transmittance (*T*) and the atmospheric extinction coefficient (*k*) of the first sample of product of combustion (GAS_1) on the basis of a ratio between the third ratio and the fourth ratio so as to cancel the effect of the interaction ($A_f$) between the first and the second optical signals with the first optical window (78a; 88) and the second optical window (78b; 98), and
calculate (168) the concentration (*N*) of the first product of combustion (12) on the basis of the measured power of the first back-scattered signal (*P*) and on the basis of the calculated absorption cross-section ($\alpha$), atmospheric transmittance (*T*) and atmospheric extinction coefficient (*k*) of the first sample of product of combustion (GAS_1).

**5.** The fire detector (211) according to any one of the preceding claims,
wherein the controller (232) is further configured to drive (158) the optical source (240) in order to cause emission of a fifth optical signal ($I_R$) and a seventh optical signal ($I_R$) at one and the same second emission wavelength ($\lambda_{L2}$), and wherein the calibration system (221) further comprises a second fluid-tight chamber (223), including a third optical window (78a; 88) and a fourth optical window (78b; 98) at a second distance (*L*) from the third optical window (78a; 88), the second chamber (223) being configured to:

(i) receive, through the third optical window (78a; 88), in a third operating condition where the second chamber (223) contains a second sample of product of combustion (GAS_2) at a second pressure, the fifth optical signal ($I_R$), and allow passage, through the fourth optical window (78b; 98), of a sixth optical signal ($I_T$) generated following an interaction ($A_g$, $A_f$) of the fifth optical signal ($I_R$) with the third optical window (78a; 88) and fourth optical window (78b; 98) and with the second sample of product of combustion (GAS_2), the second sample of product of combustion (GAS_2) being a gas or a particulate produced by combustion, and
(ii) receive, through the third optical window (78a; 88), in a fourth operating condition where the pressure of the second sample of product of combustion (GAS_2) in the second chamber (223) is a high-vacuum pressure lower than the second pressure, the seventh optical signal ($I_R$) generated by the optical source (240) and allow passage, through the fourth optical window (78b; 98), of an eighth optical signal ($I_T$) generated following an interaction ($A_f$) of the seventh optical signal ($I_R$) with the third optical window (78a; 88) and the fourth optical window (78b; 98);

and wherein the measuring system (230) is further operatively coupled to the fourth optical window (78b; 98) and is further configured to acquire the fifth optical signal ($I_R$), the sixth optical signal ($I_R$), the seventh optical signal ($I_T$), and the eighth optical signal ($I_T$) and for measuring the intensity ($I_R$, $I_T$), respectively, of the fifth optical signal ($I_R$), the sixth optical signal ($I_R$), the seventh optical signal ($I_T$), and the eighth optical signal ($I_T$);

and wherein the controller (232) is further configured to:

receive (158), from the measuring system (230), said measured intensities ($I_R$, $I_T$) of the fifth optical signal ($I_R$), the sixth optical signal ($I_T$), the seventh optical signal ($I_R$), and the eighth optical signal ($I_T$), calculate (164) a fifth ratio between the intensities ($I_R$, $I_T$) of the eighth optical signal ($I_T$) and the seventh optical signal ($I_R$), and a sixth ratio between the intensities ($I_R$, $I_T$) of the sixth optical signal ($I_T$) and the fifth optical signal ($I_R$), and calculate (164) the absorption cross-section ($\alpha$) of the second sample of product of combustion (GAS_2) on the basis of a ratio between the fifth ratio and the sixth ratio so as to cancel the effect of the interaction ($A_f$) between the fifth and the seventh optical signals with the third optical window (78a; 88) and the fourth optical window (78b; 98);

and wherein the transmission optics (4) is further configured to receive a portion of the eighth optical signal and transmit it towards a second product of combustion (12), the second product of combustion (12) being a gas or a particulate produced by combustion;

and wherein the reception optics (6) is further configured to receive a second back-scattered signal ($P$) following an interaction between said portion of the eighth optical signal and the second product of combustion (12);

and wherein the photodetector module (8) is further configured to acquire the second back-scattered signal ($P$) and measure the power of the second back-scattered signal ($P$);

the controller (232) being further configured to calculate (168) the concentration ($N$) of the second product of combustion (12) on the basis of the measured power of the second back-scattered signal ($P$) and the absorption cross-section ($\alpha$) of the second sample of product of combustion (GAS_2).

6.   A fire-detection method implemented by a LIDAR or DIAL detector, comprising the steps of:

- reducing (156) the pressure in a first fluid-tight chamber (22; 222) to a high-vacuum pressure;
- driving (158) a laser-type optical source (40; 240) to send a first optical signal ($I_R$) at a first emission wavelength ($\lambda_L$; $\lambda_{L1}$) towards the first chamber (22; 222), the first optical signal ($I_R$) being received by the first chamber (22; 222) through a first optical window (78a; 88) of the first chamber (22; 222) and resulting in a third optical signal ($I_T$) coming from the first chamber (22; 222) through a second optical window (78b; 98) of the first chamber (22; 222) at a first distance ($L$) from the first optical window (78a; 88), the third optical signal ($I_T$) being generated following the interaction ($A_f$) of the first optical signal ($I_R$) with the first optical window (78a; 88) and the second optical window (78b; 98);
- injecting (160) a first sample of product of combustion (GAS_1) into the first chamber (22; 222), the first sample of product of combustion (GAS_1) being a gas or a particulate produced by combustion;
- driving (162) the optical source (40; 240) to send a second optical signal ($I_R$) at said first emission wavelength ($\lambda_L$; $\lambda_{L1}$), the second optical signal ($I_R$) being received by the first chamber (22; 222) through the first optical window (78a; 88) and resulting in a fourth optical signal ($I_T$) coming from the first chamber (22; 222) through the second optical window (78b; 98), the fourth optical signal ($I_T$) being generated following the interaction ($A_f$, $A_g$) of the second optical signal ($I_R$) with the first optical window (78a; 88) and second optical window (78b; 98) and with said first sample of product of combustion (GAS_1);
- measuring (158, 162) the intensities ($I_R$, $I_T$), respectively, of the first optical signal ($I_R$), the second optical signal ($I_R$), the third optical signal ($I_T$), and the fourth optical signal ($I_T$);
- calculating (164) a first ratio between the intensities ($I_R$, $I_T$) of the fourth optical signal ($I_T$) and the second optical signal ($I_R$), and a second ratio between the intensities ($I_R$, $I_T$) of the third optical signal ($I_T$) and the first optical signal ($I_R$);
- calculating (164) the absorption cross-section ($\alpha$) of the first sample of product of combustion (GAS_1) on the basis of a ratio between the first ratio and the second ratio so as to cancel the effect of the interaction ($A_f$) between the first and the second optical signals with the first optical window (78a; 88) and the second optical window (78b; 98);
- transmitting (158) a portion of the fourth optical signal towards a first product of combustion (12), the first product of combustion (12) being a gas or a particulate produced by combustion;
- receiving (158) a first back-scattered signal ($P$) following an interaction between said portion of the fourth optical signal and the first product of combustion (12);
- acquiring (158) the first back-scattered signal ($P$) and measuring the power of the first back-scattered signal ($P$); and
- calculating (168) the concentration ($N$) of the first product of combustion (12) on the basis of the measured power of the first back-scattered signal ($P$) and the absorption cross-section ($\alpha$) of the first sample of product of combustion (GAS_1).

7. The method according to claim 6, further comprising the steps of:

- receiving (50) a signal indicative of a desired concentration (C) for the first sample of product of combustion (GAS_1); and
- varying (52) a volume ($V$) of the first chamber (22; 222) so that, once the first sample of product of combustion (GAS_1) has been injected (160) into the first chamber (22; 222), it will have the desired concentration (C) within said volume ($V$);

the step of varying (52) said volume ($V$) comprising the steps of:

- mechanically coupling in a releasable way a first tubular element (82) of the first chamber (22; 222) to a second tubular element (92), so that the resulting volume ($V$) of the first chamber (22; 222) will comprise the sum of the volumes of the first tubular element (82) and the second tubular element (92);
- optionally displacing at least one from between the first optical window (88) and the second optical window (98) from a respective first housing (86a; 86b; 96a; 96b) to a respective second housing (86a; 86b; 96a; 96b), each one of the first and second housings (86a, 86b, 96a, 96b) being arranged in a position corresponding to one chosen from among a first end (82a) of the first tubular element (82), a second end (82b) of the first tubular element (82), a first end (92a) of the second tubular element (92), and a second end (92b) of the second tubular element (92), so as to vary the first distance ($L$) between the first optical window (88) and the second optical window (98);
- optionally displacing the first optical window (88) or the second optical window (98) within the respective housing (86a; 86b; 96a; 96b) in which it is housed, so as to vary a distance ($\Delta L$) from the respective end (82a; 82b; 92a; 92b) where it is housed in order to vary the first distance ($L$) between the first optical window (88) and the second optical window (98).

8. The method according to claim 7, wherein the step of varying (52) the volume ($V$) of the first chamber (22; 222) comprises controlling (152) the position of each one of the first and the second tubular elements (82, 92) by a motorized linear stage, enabling coupling or release of the first and the second tubular elements (82, 92).

9. The method according to any one of the claims 6 to 8, further comprising the steps of:

- measuring (158, 162) the energies ($E_R$, $E_T$), respectively, of the first optical signal ($E_R$), the second optical signal ($E_T$), the third optical signal ($E_R$), and the fourth optical signal ($E_T$);
- calculating (64) a third ratio between the energies ($E_R$, $E_T$) of the fourth optical signal ($E_T$) and the second optical signal ($E_R$), and a fourth ratio between the energies ($E_R$, $E_T$) of the third optical signal ($E_T$) and the first optical signal ($E_R$);
- calculating (64) the atmospheric transmittance ($T$) and the atmospheric extinction coefficient ($k$) of the first sample of product of combustion (GAS_1) on the basis of the ratio between the third ratio and the fourth ratio so as to cancel the effect of the interaction ($A_f$) between the first and second optical signals with the first optical window (78a; 88) and the second optical window (78b; 98); and
- calculating (168) the concentration ($N$) of the first product of combustion (12) on the basis of the measured power of the first back-scattered signal ($P$) and on the basis of the calculated absorption cross-section ($\alpha$), atmospheric transmittance ($T$), and atmospheric extinction coefficient ($k$) of the first sample of product of combustion (GAS_1).

10. The method according to any one of the claims 6 to 9, further comprising the steps of:

- reducing (156) the pressure in a second fluid-tight chamber (223) to a high-vacuum pressure;
- driving (158) the optical source (240) to send a fifth optical signal ($I_R$) at a second emission wavelength ($\lambda_{L2}$)

towards the second chamber (223), the fifth optical signal ($I_R$) being received by the second chamber (223) through a third optical window (78a; 88) of the second chamber (223) and resulting in a sixth optical signal ($I_T$) coming from the second chamber (223) through a fourth optical window (78b; 98) of the second chamber (223) at a second distance ($L$) from the third optical window (78a; 88), the sixth optical signal ($I_T$) being generated following an interaction ($A_f$) of the fifth optical signal ($I_R$) with the third optical window (78a; 88) and the fourth optical window (78b; 98);

- injecting (160) a second sample of product of combustion (GAS_2) into the second chamber (223), the second sample of product of combustion (GAS_2) being a gas or a particulate produced by combustion;

- driving (162) the optical source (240) to send a seventh optical signal ($I_R$) at said second emission wavelength ($\lambda_{L2}$), the seventh optical signal ($I_R$) being received by the second chamber (223) through the third optical window (78a; 88) and resulting in an eighth optical signal ($I_T$) coming from the second chamber (223) through the fourth optical window (78b; 98), the eighth optical signal ($I_T$) being generated following an interaction ($A_f$, $A_g$) of the seventh optical signal ($I_R$) with the third optical window (78a; 88) and the fourth optical window (78b; 98) and with said second sample of product of combustion (GAS_2);

- measuring (158, 162) the intensities ($I_R$, $I_T$), respectively, of the fifth optical signal ($I_R$), the sixth optical signal ($I_T$), the seventh optical signal ($I_R$), and the eighth optical signal ($I_T$);

- calculating (164) a fifth ratio between the intensities ($I_R$, $I_T$) of the eighth optical signal ($I_T$) and the seventh optical signal ($I_R$), and a sixth ratio between the intensities ($I_R$, $I_T$) of the sixth optical signal ($I_T$) and the fifth optical signal ($I_R$);

- calculating (164) the absorption cross-section ($\alpha$) of the second sample of product of combustion (GAS_2) on the basis of a ratio between the fifth ratio and the sixth ratio so as to cancel the effect of the interaction ($A_f$) between the fifth and the seventh optical signals with the third optical window (78a; 88) and the fourth optical window (78b; 98);

- transmitting (158) a portion of the sixth optical signal towards a second product of combustion (12);

- receiving (158) a second back-scattered signal ($P$) following an interaction between said portion of the sixth optical signal and the second product of combustion (12);

- acquiring (158) the second back-scattered signal ($P$) and measuring the power of the second back-scattered signal ($P$); and;

- calculating (168) the concentration ($N$) of the second product of combustion (12) on the basis of the measured power of the second back-scattered signal ($P$) and the absorption cross-section ($\alpha$) of the second sample of product of combustion (GAS_2).

**Patentansprüche**

1. Brandmelder (111; 211) vom LIDAR- oder DIAL-Typ, umfassend:

- eine optische Quelle (40; 240) vom Lasertyp;
- ein Kalibrierungssystem (121; 221) umfassend:

eine Steuereinrichtung (132; 232), die betriebswirksam mit der optischen Quelle (40; 240) gekoppelt und dazu ausgelegt ist, die optische Quelle (40; 240) zu treiben (158), um die Emission eines ersten optischen Signals ($I_R$) und eines zweiten optischen Signals ($I_R$) mit einer gleichen ersten Emissionswellenlänge ($\lambda_L$; $\lambda_{L1}$) zu bewirken,

eine erste fluiddichte Kammer (22; 222), die ein erstes optisches Fenster (78a; 88) und ein zweites optisches Fenster (78b; 98) in einem ersten Abstand ($L$) von dem ersten optischen Fenster (78a; 88) aufweist, wobei die erste Kammer (22; 222) ausgelegt ist zum:

(i) Empfangen, durch das erste optische Fenster (78a; 88), in einem ersten Betriebszustand, in dem die erste Kammer (22; 222) eine erste Probe eines Verbrennungsprodukts (GAS_1) bei einem ersten Druck enthält, des ersten optischen Signals ($I_R$) und Ermöglichen des Durchlasses, durch das zweite optische Fenster (78b; 98), eines dritten optischen Signals ($I_T$), das folgend auf eine Wechselwirkung ($A_g$, $A_f$) des ersten optischen Signals ($I_R$) mit dem ersten optischen Fenster (78a; 88) und dem zweiten optischen Fenster (78b; 98) und mit der ersten Probe eines Verbrennungsprodukts (GAS_1) erzeugt wird, wobei die erste Probe eines Verbrennungsprodukts (GAS_1) ein durch Verbrennung erzeugtes Gas oder Partikel ist, und

(ii) Empfangen, durch das erste optische Fenster (78a; 88), in einem zweiten Betriebszustand, in dem der Druck in der ersten Kammer (22; 222) ein Hochvakuumdruck ist, der niedriger als der erste Druck ist, des zweiten optischen Signals ($I_R$), das von der optischen Quelle (40; 240) erzeugt wird, und Ermöglichen des Durchlasses, durch das zweite optische Fenster (78b; 98), eines vierten optischen Signals ($I_T$), das folgend auf eine Wechselwirkung ($A_f$) des zweiten optischen Signals ($I_R$) mit dem ersten optischen Fenster (78a; 88) und dem zweiten optischen Fenster (78b; 98) erzeugt wird,

ein Messsystem (30; 230), das betriebswirksam mit der optischen Quelle (40; 240) und mit dem zweiten optischen Fenster (78b; 98) gekoppelt und dazu ausgelegt ist, das erste optische Signal ($I_R$), das zweite optische Signal ($I_R$), das dritte optische Signal ($I_T$) und das vierte optische Signal ($I_T$) zu erlangen und entsprechend die Intensität ($I_R$, $I_T$) des ersten optischen Signals ($I_R$), des zweiten optischen Signals ($I_R$), des dritten optischen Signals ($I_T$) und des vierten optischen Signals ($I_T$) zu messen; wobei die Steuereinrichtung (132; 232) ferner ausgelegt ist zum:

Empfangen (158) der gemessenen Intensitäten ($I_R$, $I_T$) von dem Messsystem (30; 230);
Berechnen (164) eines ersten Verhältnisses zwischen den Intensitäten ($I_R$, $I_T$) des vierten optischen Signals ($I_T$) und des zweiten optischen Signals ($I_R$) und eines zweiten Verhältnisses zwischen den Intensitäten ($I_R$, $I_T$) des dritten optischen Signals ($I_T$) und des ersten optischen Signals ($I_R$), und Berechnen (164) des Absorptionsquerschnitts ($\alpha$) der ersten Probe eines Verbrennungsprodukts (GAS_1) auf Grundlage eines Verhältnisses zwischen dem ersten Verhältnis und dem zweiten Verhältnis, um die Wirkung der Wechselwirkung ($A_f$) zwischen dem ersten und dem zweiten optischen Signal mit dem ersten optischen Fenster (78a; 88) und dem zweiten optischen Fenster (78b; 98) aufzuheben;
wobei der Brandmelder (111; 211) ferner umfasst:

- eine Sendeoptik (4), die dazu ausgelegt ist, einen Teil ($I_{TX}$) des vierten optischen Signals zu empfangen und ihn zu einem ersten Verbrennungsprodukt (12) hin zu senden, wobei das erste Verbrennungsprodukt (12) ein durch Verbrennung erzeugtes Gas oder Partikel ist;
- eine Empfangsoptik (6), die dazu ausgelegt ist, ein erstes rückgestreutes Signal ($P$) folgend auf eine Wechselwirkung zwischen dem Teil ($I_{TX}$) des vierten optischen Signals und dem ersten Verbrennungsprodukt (12) zu empfangen; und
- ein Photodetektormodul (8), das dazu ausgelegt ist, das erste rückgestreute Signal ($P$) zu erlangen und die Leistung des ersten rückgestreuten Signals ($P$) zu messen, wobei die Steuereinrichtung (132; 232) ferner dazu ausgelegt ist, die Konzentration ($N$) des ersten Verbrennungsprodukts (12) auf Grundlage der gemessenen Leistung des ersten rückgestreuten Signals ($P$) und des Absorptionsquerschnitts ($\alpha$) der ersten Probe eines Verbrennungsprodukts (GAS_1) zu berechnen (168).

2.  Brandmelder (111; 211) nach Anspruch 1,
    wobei die Steuereinrichtung (132; 232) ferner dazu ausgelegt ist, ein Signal zu empfangen (150), das eine erwünschte Konzentration ($C$) für die erste Probe eines Verbrennungsprodukts (GAS_1) angibt,
    und wobei die erste Kammer (22; 222) ein erstes röhrenförmiges Element (82) und Einstelleinrichtungen (84a, 84b, 94a, 94b) umfasst, die dazu ausgelegt sind, ein Volumen ($V$) der ersten Kammer (22; 222) so zu variieren, dass in der ersten Betriebskonfiguration die erste Probe eines Verbrennungsprodukts (GAS_1) die erwünschte Konzentration ($C$) innerhalb des Volumens ($V$) aufweist,
    wobei die Einstelleinrichtungen (84a, 84b, 94a, 94b) Kopplungseinrichtungen (83a, 83b) eines lösbaren Typs umfassen, die dazu ausgelegt sind, das erste röhrenförmige Element (82) mit einem zweiten röhrenförmigen Element (92) zu koppeln, so dass das resultierende Volumen ($V$) der ersten Kammer (22; 222) die Summe der Volumina des ersten röhrenförmigen Elements (82) und des zweiten röhrenförmigen Elements (92) umfasst,
    wobei die Einstelleinrichtungen (84a, 84b, 94a, 94b) optional Gehäuse (86a, 86b, 96a, 96b) zum lösbaren Einhausen jedes des ersten optischen Fensters (88) und des zweiten optischen Fensters (98) an einem ersten Ende (82a) des ersten röhrenförmigen Elements (82) oder an einem zweiten Ende (82b) des ersten röhrenförmigen Elements (82) oder an einem ersten Ende (92a) des zweiten röhrenförmigen Elements (92) oder an einem zweiten Ende (92b) des zweiten röhrenförmigen Elements (92) umfassen, wobei das Volumen ($V$) der ersten Kammer (22; 222) durch den zwischen dem ersten optischen Fenster (88) und dem zweiten optischen Fenster (98) vorhandenen Raum begrenzt wird,
    wobei die Gehäuse (86a, 86b, 96a, 96b) optional dazu ausgelegt sind, eine Variation eines Abstands ($\Delta L$) zwischen jedem entsprechenden ersten optischen Fenster (88) und zweiten optischen Fenster (98) und dem entsprechenden Ende (82a; 82b; 92a; 92b) zu ermöglichen, wo es eingehaust ist, um den ersten Abstand ($\Delta L$) zwischen dem ersten optischen Fenster (88) und dem zweiten optischen Fenster (98) zu variieren.

**3.** Brandmelder (111; 211) nach Anspruch 2, der ferner eine motorisierte Linearführung umfasst, wobei jedes des ersten und des zweiten röhrenförmigen Elements (82; 92) mechanisch mit der motorisierten Linearführung gekoppelt ist und wobei die Steuereinrichtung (132; 232) dazu ausgelegt ist, die motorisierte Linearführung so zu treiben (152), dass die Position jedes des ersten und des zweiten röhrenförmigen Elements (82; 92) gesteuert wird, wodurch das Koppeln oder Lösen des ersten und des zweiten röhrenförmigen Elements (82, 92) ermöglicht wird.

**4.** Brandmelder (111; 211) nach einem der vorhergehenden Ansprüche,
wobei das Messsystem (30; 230) ferner ausgelegt ist zum entsprechenden Messen (158, 162) der Energie ($E_R$, $E_T$) des ersten optischen Signals ($E_R$), des zweiten optischen Signals ($E_R$), des dritten optischen Signals ($E_T$) und des vierten optischen Signals ($E_T$),
und wobei die Steuereinrichtung (132; 232) ferner ausgelegt ist zum:

Empfangen (158) der gemessenen Energien ($E_R$, $E_T$) von dem Messsystem (30; 230),
Berechnen (164) eines dritten Verhältnisses zwischen den Energien ($E_R$, $E_T$) des vierten optischen Signals ($E_T$) und des zweiten optischen Signals ($E_R$) und eines vierten Verhältnisses zwischen den Energien ($E_R$, $E_T$) des dritten optischen Signals ($E_T$) und des ersten optischen Signals ($E_R$),
Berechnen (164) des atmosphärischen Transmissionsgrades ($T$) und des atmosphärischen Extinktionskoeffizienten ($k$) der ersten Probe eines Verbrennungsprodukts (GAS_1) auf Grundlage eines Verhältnisses zwischen dem dritten Verhältnis und dem vierten Verhältnis, um die Wirkung der Wechselwirkung ($A_f$) zwischen dem ersten und zweiten optischen Signal mit dem ersten optischen Fenster (78a; 88) und dem zweiten optischen Fenster (78b; 98) aufzuheben, und Berechnen (168) der Konzentration ($N$) des ersten Verbrennungsprodukts (12) auf Grundlage der gemessenen Leistung des ersten rückgestreuten Signals ($P$) und auf Grundlage des berechneten Absorptionsquerschnitts ($\alpha$), des atmosphärischen Transmissionsgrades ($T$) und des atmosphärischen Extinktionskoeffizienten ($k$) der ersten Probe eines Verbrennungsprodukts (GAS_1).

**5.** Brandmelder (211) nach einem der vorhergehenden Ansprüche,
wobei die Steuereinrichtung (232) ferner dazu ausgelegt ist, die optische Quelle (240) zu treiben (158), um die Emission eines fünften optischen Signals ($I_R$) und eines siebten optischen Signals ($I_R$) bei ein und derselben zweiten Emissionswellenlänge ($\lambda_{L2}$) zu bewirken,
und wobei das Kalibrierungssystem (221) ferner eine zweite fluiddichte Kammer (223) umfasst, die ein drittes optisches Fenster (78a; 88) und ein viertes optisches Fenster (78b; 98) in einem zweiten Abstand ($L$) von dem dritten optischen Fenster (78a; 88) aufweist, wobei die zweite Kammer (223) ausgelegt ist zum:

(i) Empfangen, durch das dritte optische Fenster (78a; 88), in einem dritten Betriebszustand, in dem die zweite Kammer (223) eine zweite Probe eines Verbrennungsprodukts (GAS_2) bei einem zweiten Druck enthält, des fünften optischen Signals ($I_R$) und Ermöglichen des Durchlasses, durch das vierte optische Fenster (78b; 98), eines sechsten optischen Signals ($I_T$), das folgend auf eine Wechselwirkung ($A_g$, $A_f$) des fünften optischen Signals ($I_R$) mit dem dritten optischen Fenster (78a; 88) und dem vierten optischen Fenster (78b; 98) und mit der zweiten Probe eines Verbrennungsprodukts (GAS_2) erzeugt wird, wobei die zweite Probe eines Verbrennungsprodukts (GAS_2) ein durch Verbrennung erzeugtes Gas oder Partikel ist, und
(ii) Empfangen, durch das dritte optische Fenster (78a; 88), in einem vierten Betriebszustand, in dem der Druck der zweiten Probe eines Verbrennungsprodukts (GAS_2) in der zweiten Kammer (223) ein Hochvakuumdruck ist, der niedriger als der zweite Druck ist, des siebten optischen Signals ($I_R$), das von der optischen Quelle (240) erzeugt wird, und Ermöglichen des Durchlasses, durch das vierte optische Fenster (78b; 98), eines achten optischen Signals ($I_T$), das folgend auf eine Wechselwirkung ($A_f$) des siebten optischen Signals ($I_R$) mit dem dritten optischen Fenster (78a; 88) und dem vierten optischen Fenster (78b; 98) erzeugt wird;

und wobei das Messsystem (230) ferner betriebswirksam mit dem vierten optischen Fenster (78b; 98) gekoppelt ist und ferner dazu ausgelegt ist, das fünfte optische Signal ($I_R$), das sechste optische Signal ($I_R$), das siebte optische Signal ($I_T$) und das achte optische Signal ($I_T$) zu erlangen und entsprechend die Intensität ($I_R$, $I_T$) des fünften optischen Signals ($I_R$), des sechsten optischen Signals ($I_R$), des siebten optischen Signals ($I_T$) und des achten optischen Signals ($I_T$) zu messen;
und wobei die Steuereinrichtung (232) ferner ausgelegt ist zum:

Empfangen (158), von dem Messsystem (230), der gemessenen Intensitäten ($I_R$, $I_T$) des fünften optischen Signals ($I_R$), des sechsten optischen Signals ($I_T$), des siebten optischen Signals ($I_R$) und des achten optischen Signals ($I_T$),
Berechnen (164) eines fünften Verhältnisses zwischen den Intensitäten ($I_R$, $I_T$) des achten optischen Signals

($I_T$) und des siebten optischen Signals ($I_R$) und eines sechsten Verhältnisses zwischen den Intensitäten ($I_R$, $I_T$) des sechsten optischen Signals ($I_T$) und des fünften optischen Signals ($I_R$), und

Berechnen (164) des Absorptionsquerschnitts ($\alpha$) der zweiten Probe eines Verbrennungsprodukts (GAS_2) auf Grundlage eines Verhältnisses zwischen dem fünften Verhältnis und dem sechsten Verhältnis, um die Wirkung der Wechselwirkung ($A_f$) zwischen dem fünften und dem siebten optischen Signal mit dem dritten optischen Fenster (78a; 88) und dem vierten optischen Fenster (78b; 98) aufzuheben;

und wobei die Sendeoptik (4) ferner dazu ausgelegt ist, einen Teil des achten optischen Signals zu empfangen und ihn zu einem zweiten Verbrennungsprodukt (12) hin zu senden, wobei das zweite Verbrennungsprodukt (12) ein durch Verbrennung erzeugtes Gas oder Partikel ist;

und wobei die Empfangsoptik (6) ferner dazu ausgelegt ist, ein zweites rückgestreutes Signal ($P$) folgend auf eine Wechselwirkung zwischen dem Teil des achten optischen Signals und dem zweiten Verbrennungsprodukt (12) zu empfangen;

und wobei das Fotodetektormodul (8) ferner dazu ausgelegt ist, das zweite rückgestreute Signal ($P$) zu erlangen und die Leistung des zweiten rückgestreuten Signals ($P$) zu messen;

wobei die Steuereinrichtung (232) ferner dazu ausgelegt ist, die Konzentration ($N$) des zweiten Verbrennungsprodukts (12) auf Grundlage der gemessenen Leistung des zweiten rückgestreuten Signals ($P$) und des Absorptionsquerschnitts ($\alpha$) des zweiten Verbrennungsprodukts (GAS_2) zu berechnen (168).

6.  Brandmeldeverfahren, implementiert durch einen LIDAR- oder DIAL-Detektor, das die Schritte umfasst von:

- Reduzieren (156) des Drucks in einer ersten fluiddichten Kammer (22; 222) auf einen Hochvakuumdruck;

- Treiben (158) einer optischen Quelle (40; 240) vom Lasertyp zum Schicken eines ersten optischen Signals ($I_R$) mit einer ersten Emissionswellenlänge ($\lambda_L$; $\lambda_{L1}$) zu der ersten Kammer (22; 222) hin, wobei das erste optische Signal ($I_R$) von der ersten Kammer (22; 222) durch ein erstes optisches Fenster (78a; 88) der ersten Kammer (22; 222) empfangen wird und dazu führt, dass ein drittes optisches Signal ($I_T$) von der ersten Kammer (22; 222) durch ein zweites optisches Fenster (78b; 98) der ersten Kammer (22; 222) in einem ersten Abstand ($L$) von dem ersten optischen Fenster (78a; 88) kommt, wobei das dritte optische Signal ($I_T$) folgend auf die Wechselwirkung ($A_f$) des ersten optischen Signals ($I_R$) mit dem ersten optischen Fenster (78a; 88) und dem zweiten optischen Fenster (78b; 98) erzeugt wird;

- Einspritzen (160) einer ersten Probe eines Verbrennungsprodukts (GAS_1) in die erste Kammer (22; 222), wobei die erste Probe eines Verbrennungsprodukts (GAS_1) ein durch Verbrennung erzeugtes Gas oder Partikel ist;

- Treiben (162) der optischen Quelle (40; 240), um ein zweites optisches Signal ($I_R$) mit der ersten Emissionswellenlänge ($\lambda_L$; $\lambda_{L1}$) zu schicken, wobei das zweite optische Signal ($I_R$) von der ersten Kammer (22; 222) durch das erste optische Fenster (78a; 88) empfangen wird und dazu führt, dass ein viertes optisches Signal ($I_T$) von der ersten Kammer (22 ; 222) durch das zweite optische Fenster (78b; 98) kommt, wobei das vierte optische Signal ($I_T$) folgend auf die Wechselwirkung ($A_f$, $A_g$) des zweiten optischen Signals ($I_R$) mit dem ersten optischen Fenster (78a; 88) und dem zweiten optischen Fenster (78b; 98) und mit der ersten Probe eines Verbrennungsprodukts (GAS_1) erzeugt wird;

- entsprechendes Messen (158, 162) der Intensitäten ($I_R$, $I_T$) des ersten optischen Signals ($I_R$), des zweiten optischen Signals ($I_R$), des dritten optischen Signals ($I_T$) und des vierten optischen Signals ($I_T$);

- Berechnen (164) eines ersten Verhältnisses zwischen den Intensitäten ($I_R$, $I_T$) des vierten optischen Signals ($I_T$) und des zweiten optischen Signals ($I_R$) und eines zweiten Verhältnisses zwischen den Intensitäten ($I_R$, $I_T$) des dritten optischen Signals ($I_T$) und des ersten optischen Signals ($I_R$);

- Berechnen (164) des Absorptionsquerschnitts ($\alpha$) der ersten Probe eines Verbrennungsprodukts (GAS_1) auf Grundlage eines Verhältnisses zwischen dem ersten Verhältnis und dem zweiten Verhältnis, um die Wirkung der Wechselwirkung ($A_f$) zwischen dem ersten und dem zweiten optischen Signal mit dem ersten optischen Fenster (78a; 88) und dem zweiten optischen Fenster (78b; 98) aufzuheben;

- Senden (158) eines Teils des vierten optischen Signals zu einem ersten Verbrennungsprodukt (12) hin, wobei das erste Verbrennungsprodukt (12) ein durch Verbrennung erzeugtes Gas oder Partikel ist;

- Empfangen (158) eines ersten rückgestreuten Signals ($P$) folgend auf eine Wechselwirkung zwischen dem Teil des vierten optischen Signals und dem ersten Verbrennungsprodukt (12);

- Erlangen (158) des ersten rückgestreuten Signals ($P$) und Messen der Leistung des ersten rückgestreuten Signals ($P$); und

- Berechnen (168) der Konzentration ($N$) des ersten Verbrennungsprodukts (12) auf Grundlage der gemessenen Leistung des ersten rückgestreuten Signals ($P$) und des Absorptionsquerschnitts ($\alpha$) der ersten Probe eines Verbrennungsprodukts (GAS_1).

**7.** Verfahren nach Anspruch 6, das ferner die Schritte umfasst von:

- Empfangen (50) eines Signals, das eine erwünschte Konzentration (*C*) für die erste Probe eines Verbrennungsprodukts (GAS_1) angibt; und
- Variieren (52) eines Volumens (*V*) der ersten Kammer (22; 222), so dass die erste Probe eines Verbrennungsprodukts (GAS_1), sobald sie in die erste Kammer (22; 222) eingespritzt (160) wurde, die erwünschte Konzentration (*C*) innerhalb des Volumens (*V*) hat;

wobei der Schritt des Variierens (52) des Volumens (*V*) die Schritte umfasst von:

- mechanischem Koppeln eines ersten röhrenförmigen Elements (82) der ersten Kammer (22; 222) mit einem zweiten röhrenförmigen Element (92) auf lösbare Weise, so dass das resultierende Volumen (*V*) der ersten Kammer (22; 222) die Summe der Volumina des ersten röhrenförmigen Elements (82) und des zweiten röhrenförmigen Elements (92) umfasst;
- optionalem Verschieben mindestens eines von zwischen dem ersten optischen Fenster (88) und dem zweiten optischen Fenster (98) von einem entsprechenden ersten Gehäuse (86a; 86b; 96a; 96b) zu einem entsprechenden zweiten Gehäuse (86a; 86b; 96a; 96b), wobei jedes des ersten und des zweiten Gehäuses (86a, 86b; 96a, 96b) in einer Position angeordnet ist, die einer Position entspricht, die aus einem ersten Ende (82a) des ersten röhrenförmigen Elements (82), einem zweiten Ende (82b) des ersten röhrenförmigen Elements (82), einem ersten Ende (92a) des zweiten röhrenförmigen Elements (92) und einem zweiten Ende (92b) des zweiten röhrenförmigen Elements (92) ausgewählt ist, um den ersten Abstand (*L*) zwischen dem ersten optischen Fenster (88) und dem zweiten optischen Fenster (98) zu variieren;
- optionalem Verschieben des ersten optischen Fensters (88) oder des zweiten optischen Fensters (98) innerhalb des entsprechenden Gehäuses (86a; 86b; 96a; 96b), in dem es eingehaust ist, um einen Abstand (Δ*L*) von dem entsprechenden Ende (82a; 82b; 92a; 92b), wo es eingehaust ist, zu variieren, um den ersten Abstand (*L*) zwischen dem ersten optischen Fenster (88) und dem zweiten optischen Fenster (98) zu variieren.

**8.** Verfahren nach Anspruch 7, wobei der Schritt des Variierens (52) des Volumens (*V*) der ersten Kammer (22; 222) das Steuern (152) der Position jedes des ersten und des zweiten röhrenförmigen Elements (82, 92) durch eine motorisierte Linearführung umfasst, wodurch das Koppeln oder Lösen des ersten und des zweiten röhrenförmigen Elements (82, 92) ermöglicht wird.

**9.** Verfahren nach einem der Ansprüche 6 bis 8, das ferner die Schritte umfasst von:

- entsprechendem Messen (158, 162) der Energien (*E*$_R$, *E*$_T$) des ersten optischen Signals (*E*$_R$), des zweiten optischen Signals (*E*$_T$), des dritten optischen Signals (*E*$_R$) und des vierten optischen Signals (*E*$_T$);
- Berechnen (64) eines dritten Verhältnisses zwischen den Energien (*E*$_R$, *E*$_T$) des vierten optischen Signals (*E*$_T$) und des zweiten optischen Signals (*E*$_R$) und eines vierten Verhältnisses zwischen den Energien (*E*$_R$, *E*$_T$) des dritten optischen Signals (*E*$_T$) und des ersten optischen Signals (*E*$_R$);
- Berechnen (64) des atmosphärischen Transmissionsgrads (*T*) und des atmosphärischen Extinktionskoeffizienten (*k*) der ersten Probe eines Verbrennungsprodukts (GAS_1) auf Grundlage des Verhältnisses zwischen dem dritten Verhältnis und dem vierten Verhältnis, um die Wirkung der Wechselwirkung (*A*$_f$) zwischen dem ersten und dem zweiten optischen Signal mit dem ersten optischen Fenster (78a; 88) und dem zweiten optischen Fenster (78b; 98) aufzuheben; und
- Berechnen (168) der Konzentration (*N*) des ersten Verbrennungsprodukts (12) auf Grundlage der gemessenen Leistung des ersten rückgestreuten Signals (*P*) und auf Grundlage des berechneten Absorptionsquerschnitts (α), des atmosphärischen Transmissionsgrads (*T*) und des atmosphärischen Extinktionskoeffizienten (*k*) der ersten Probe eines Verbrennungsprodukts (GAS_1).

**10.** Verfahren nach einem der Ansprüche 6 bis 9, das ferner die Schritte umfasst von:

- Reduzieren (156) des Drucks in einer zweiten fluiddichten Kammer (223) auf einen Hochvakuumdruck;
- Treiben (158) der optischen Quelle (240), um ein fünftes optisches Signal (*I*$_R$) mit einer zweiten Emissionswellenlänge (λ$_{L2}$) zu der zweiten Kammer (223) hin zu schicken, wobei das fünfte optische Signal (*I*$_R$) von der zweiten Kammer (223) durch ein drittes optisches Fenster (78a; 88) der zweiten Kammer (223) empfangen wird und dazu führt, dass ein sechstes optisches Signal (*I*$_T$) von der zweiten Kammer (223) durch ein viertes optisches Fenster (78b; 98) der zweiten Kammer (223) in einem zweiten Abstand (*L*) von dem dritten optischen Fenster (78a; 88) kommt, wobei das sechste optische Signal (*I*$_T$) folgend auf eine Wechselwirkung (*A*$_f$) des fünften optischen Signals ($I_R$) mit dem dritten optischen Fenster (78a; 88) und dem vierten optischen Fenster (78b; 98) erzeugt wird;

- Einspritzen (160) einer zweiten Probe eines Verbrennungsprodukts (GAS_2) in die zweite Kammer (223), wobei die zweite Probe eines Verbrennungsprodukts (GAS_2) ein durch Verbrennung erzeugtes Gas oder Partikel ist;

- Treiben (162) der optischen Quelle (240), um ein siebtes optisches Signal ($I_R$) mit der zweiten Emissionswellenlänge ($\lambda_{L2}$) zu schicken, wobei das siebte optische Signal ($I_R$) von der zweiten Kammer (223) durch das dritte optische Fenster (78a; 88) empfangen wird und dazu führt, dass ein achtes optisches Signal ($I_T$) von der zweiten Kammer (223) durch das vierte optische Fenster (78b; 98) kommt, wobei das achte optische Signal ($I_T$) folgend auf eine Wechselwirkung ($A_f$, $A_g$) des siebten optischen Signals ($I_R$) mit dem dritten optischen Fenster (78a; 88) und dem vierten optischen Fenster (78b; 98) und mit der zweiten Probe eines Verbrennungsprodukts (GAS_2) erzeugt wird;

- entsprechendem Messen (158, 162) der Intensitäten ($I_R$, $I_T$) des fünften optischen Signals ($I_R$), des sechsten optischen Signals ($I_T$), des siebten optischen Signals ($I_R$) und des achten optischen Signals ($I_T$);

- Berechnen (164) eines fünften Verhältnisses zwischen den Intensitäten ($I_R$, $I_T$) des achten optischen Signals ($I_T$) und des siebten optischen Signals ($I_R$) und eines sechsten Verhältnisses zwischen den Intensitäten ($I_R$, $I_T$) des sechsten optischen Signals ($I_T$) und des fünften optischen Signals ($I_R$);

- Berechnen (164) des Absorptionsquerschnitts ($\alpha$) der zweiten Probe eines Verbrennungsprodukts (GAS_2) auf Grundlage eines Verhältnisses zwischen dem fünften Verhältnis und dem sechsten Verhältnis, um die Wirkung der Wechselwirkung ($A_f$) zwischen dem fünften und dem siebten optischen Signal mit dem dritten optischen Fenster (78a; 88) und dem vierten optischen Fenster (78b; 98) aufzuheben;

- Senden (158) eines Teils des sechsten optischen Signals zu einem zweiten Verbrennungsprodukt (12) hin;

- Empfangen (158) eines zweiten rückgestreuten Signals ($P$) folgend auf eine Wechselwirkung zwischen dem Teil des sechsten optischen Signals und dem zweiten Verbrennungsprodukt (12);

- Erlangen (158) des zweiten rückgestreuten Signals ($P$) und Messen der Leistung des zweiten rückgestreuten Signals ($P$);
und;

- Berechnen (168) der Konzentration ($N$) des zweiten Verbrennungsprodukts (12) auf Grundlage der gemessenen Leistung des zweiten rückgestreuten Signals ($P$) und des Absorptionsquerschnitts ($\alpha$) der zweiten Probe eines Verbrennungsprodukts (GAS_2).

## Revendications

1. Détecteur d'incendie (111 ; 211) de type LIDAR ou DIAL, comprenant :

- une source optique de type laser (40 ; 240) ;
- un système d'étalonnage (121 ; 221) comprenant :

un dispositif de commande (132 ; 232) couplé fonctionnellement à la source optique (40 ; 240) et configuré pour entraîner (158) la source optique (40 ; 240) afin de provoquer l'émission d'un premier signal optique ($I_R$) et d'un deuxième signal optique ($I_R$) avec une même première longueur d'onde d'émission ($\lambda_L$ ; $\lambda_{L1}$), une première chambre étanche aux fluides (22 ; 222), qui comprend une première fenêtre optique (78a ; 88) et une deuxième fenêtre optique (78b ; 98) à une première distance (L) de la première fenêtre optique (78a ; 88), la première chambre (22 ; 222) étant configurée pour :

(i) recevoir, à travers la première fenêtre optique (78a ; 88), dans une première condition de fonctionnement où la première chambre (22 ; 222) contient un premier échantillon de produit de combustion (GAS_1) à une première pression, le premier signal optique ($I_R$), et permettre le passage, à travers la deuxième fenêtre optique (78b ; 98), d'un troisième signal optique ($I_T$) généré à la suite d'une interaction ($A_g$, $A_f$) du premier signal optique ($I_R$) avec la première fenêtre optique (78a ; 88) et la deuxième fenêtre optique (78b ; 98) et avec ledit premier échantillon de produit de combustion (GAS_1), le premier échantillon de produit de combustion (GAS_1) étant un gaz ou une particule produit par la combustion, et

(ii) recevoir, à travers la première fenêtre optique (78a ; 88), dans une deuxième condition de fonctionnement où la pression dans la première chambre (22 ; 222) est une pression de vide poussé inférieure à la première pression, le deuxième signal optique ($I_R$) généré par la source optique (40 ; 240), et, permettant le passage, à travers la deuxième fenêtre optique (78b ; 98), d'un quatrième signal optique ($I_T$) généré à la suite d'une interaction ($A_f$) du deuxième signal optique ($I_R$) avec la première fenêtre optique (78a ; 88) et la deuxième fenêtre optique (78b ; 98),

un système de mesure (30 ; 230), qui est couplé fonctionnellement à la source optique (40 ; 240) et à la deuxième fenêtre optique (78b ; 98), et est configuré pour acquérir le premier signal optique ($I_R$), le deuxième signal optique ($I_R$), le troisième signal optique ($I_T$) et le quatrième signal optique ($I_T$), et pour mesurer l'intensité ($I_R$, $I_T$), respectivement, du premier signal optique ($I_R$), du deuxième signal optique ($I_R$), du troisième signal optique ($I_T$) et du quatrième signal optique ($I_T$) ;
ledit dispositif de commande (132 ; 232) étant en outre configuré pour :

recevoir (158), en provenance du système de mesure (30 ; 230), lesdites intensités mesurées ($I_R$, $I_T$), calculer (164) un premier rapport entre les intensités ($I_R$, $I_T$) du quatrième signal optique ($I_T$) et du deuxième signal optique ($I_R$), et un deuxième rapport entre les intensités ($I_R$, $I_T$) du troisième signal optique ($I_T$) et du premier signal optique ($I_R$), et
calculer (164) la section transversale d'absorption ($\alpha$) du premier échantillon de produit de combustion (GAS_1) sur la base d'un rapport entre le premier rapport et le deuxième rapport de manière à annuler l'effet de l'interaction ($A_f$) entre les premier et deuxième signaux optiques avec la première fenêtre optique (78a ; 88) et la deuxième fenêtre optique (78b ; 98) ;
le détecteur d'incendie (111 ; 211) comprenant en outre :

- une optique de transmission (4), configurée pour recevoir une partie ($I_{TX}$) du quatrième signal optique et la transmettre vers un premier produit de combustion (12), le premier produit de combustion (12) étant un gaz ou une particule produite par la combustion ;
- une optique de réception (6), configurée pour recevoir un premier signal rétrodiffusé (P) à la suite d'une interaction, entre ladite portion ($I_{TX}$) du quatrième signal optique et le premier produit de combustion (12) ; et
- un module photodétecteur (8), configuré pour acquérir le premier signal rétrodiffusé (P) et mesurer la puissance du premier signal rétrodiffusé (P) ;

le dispositif de commande (132 ; 232) étant en outre configuré pour calculer (168) la concentration (N) du premier produit de combustion (12) sur la base de la puissance mesurée du premier signal rétrodiffusé (P) et de la section transversale d'absorption ($\alpha$) du premier échantillon de produit de combustion (GAS_1).

2. Détecteur d'incendie (111 ; 211) selon la revendication 1,
le dispositif de commande (132 ; 232) étant en outre configuré pour recevoir (150) un signal indiquant une concentration souhaitée (C) pour le premier échantillon de produit de combustion (GAS_1),
et la première chambre (22 ; 222) comprenant un premier élément tubulaire (82) et des moyens de réglage (84a, 84b, 94a, 94b), configurés pour faire varier un volume (V) de la première chambre (22 ; 222) de sorte que, dans la première configuration de fonctionnement, le premier échantillon de produit de combustion (GAS_1) aura la concentration souhaitée (C) dans ledit volume (V),
lesdits moyens de réglage (84a, 84b, 94a, 94b) comprenant des moyens de couplage d'un type amovible (83a, 83b), configurés pour coupler le premier élément tubulaire (82) à un second élément tubulaire (92) de sorte que le volume résultant (V) de la première chambre (22 ; 222) comprendra la somme des volumes du premier élément tubulaire (82) et du second élément tubulaire (92),
lesdits moyens de réglage (84a, 84b, 94a, 94b) comprenant éventuellement des logements (86a, 86b, 96a, 96b) pour loger de manière amovible chacune de la première fenêtre optique (88) et de la deuxième fenêtre optique (98) à une première extrémité (82a) du premier élément tubulaire (82) ou à une seconde extrémité (82b) du premier élément tubulaire (82), ou à une première extrémité (92a) du second élément tubulaire (92) ou à une seconde extrémité (92b) du second élément tubulaire (92), le volume (V) de la première chambre (22 ; 222) étant délimité par l'espace compris entre la première fenêtre optique (88) et la fenêtre optique (98),
lesdits logements (86a, 86b, 96a, 96b) étant éventuellement configurés pour permettre la variation d'une distance ($\Delta L$) entre chaque première fenêtre optique (88) et deuxième fenêtre optique (98) respective et l'extrémité respective (82a ; 82b ; 92a ; 92b) où elle est logée, de manière à faire varier la première distance (L) entre la première fenêtre optique (88) et la deuxième fenêtre optique (98)

3. Détecteur d'incendie (111 ; 211) selon la revendication 2, comprenant en outre une platine linéaire motorisée, chacun des premier et second éléments tubulaires (82 ; 92) étant mécaniquement couplé à ladite platine linéaire motorisée,

et le dispositif de commande (132 ; 232) étant configuré pour entraîner (152) ladite platine linéaire motorisée de manière à commander la position de chacun des premier et second éléments tubulaires (82 ; 92), permettant l'accouplement ou le désaccouplement des premier et second éléments tubulaires (82, 92).

4. Détecteur d'incendie (111 ; 211) selon l'une quelconque des revendications précédentes,
le système de mesure (30 ; 230) étant en outre configuré pour mesurer (158, 162) l'énergie ($E_R$, $E_T$), respectivement, du premier signal optique ($E_R$), du deuxième signal optique ($E_R$), du troisième signal optique ($E_T$) et du quatrième signal optique ($E_T$), et le dispositif de commande (132 ; 232) étant en outre configuré pour :

recevoir (158) en provenance du système de mesure (30, 230) lesdites énergies mesurées ($E_R$, $E_T$),
calculer (164) un troisième rapport entre les énergies ($E_R$, $E_T$) du quatrième signal optique ($E_T$) et du deuxième signal optique ($E_R$), et un quatrième rapport entre les énergies ($E_R$, $E_T$) du troisième signal optique ($E_T$) et du premier signal optique ($E_R$),
calculer (164) la transmittance atmosphérique (T) et le coefficient d'extinction atmosphérique (k) du premier échantillon de produit de combustion (GAS_1) sur la base d'un rapport entre le troisième rapport et le quatrième rapport de manière à annuler l'effet de l'interaction ($A_f$) entre les premier et deuxième signaux optiques avec la première fenêtre optique (78a ; 88) et la deuxième fenêtre optique (78b ; 98), et
calculer (168) la concentration (N) du premier produit de combustion (12) sur la base de la puissance mesurée du premier signal rétrodiffusé (P) et sur la base de la section transversale d'absorption calculée ($\alpha$), de la transmission atmosphérique (T) et du coefficient d'extinction atmosphérique (*k*) du premier échantillon de produit de combustion (GAS_1)

5. Détecteur d'incendie (211) selon l'une quelconque des revendications précédentes,
le dispositif de commande (232) étant en outre configuré pour entraîner (158) la source optique (240) afin de provoquer l'émission d'un cinquième signal optique ($I_R$) et d'un septième signal optique ($I_R$) à une seule et même deuxième longueur d'onde d'émission ($\lambda_{L2}$),
et le système d'étalonnage (221) comprenant en outre une deuxième chambre étanche aux fluides (223), comprenant une troisième fenêtre optique (78a ; 88) et une quatrième fenêtre optique (78b ; 98) à une deuxième distance (L) de la troisième fenêtre optique (78a ; 88), la deuxième chambre (223) étant configurée pour :

(i) recevoir, à travers la troisième fenêtre optique (78a ; 88), dans une troisième condition de fonctionnement où la deuxième chambre (223) contient un deuxième échantillon de produit de combustion (GAS_2) à une deuxième pression, le cinquième signal optique ($I_R$), et permettre le passage, à travers la quatrième fenêtre optique (78b ; 98), d'un sixième signal optique ($I_T$) généré à la suite d'une interaction ($A_g$, $A_f$) du cinquième signal optique ($I_R$) avec la troisième fenêtre optique (78a ; 88) et la quatrième fenêtre optique (78b ; 98) et avec le deuxième échantillon de produit de combustion (GAS_2), le deuxième échantillon de produit de combustion (GAS_2) étant un gaz ou une particule produit par la combustion, et
(ii) recevoir, à travers la troisième fenêtre optique (78a ; 88), dans une quatrième condition de fonctionnement où la pression du deuxième échantillon de produit de combustion (GAS_2) dans la deuxième chambre (223) est une pression de vide poussé inférieure à la deuxième pression, le septième signal optique ($I_R$) généré par la source optique (240), et permettre le passage, à travers la quatrième fenêtre optique (78b ; 98), d'un huitième signal optique ($I_T$) généré à la suite d'une interaction ($A_f$) du septième signal optique ($I_R$) avec la troisième fenêtre optique (78a ; 88) et la quatrième fenêtre optique (78b ; 98) ;

et le système de mesure (230) étant en outre couplé de manière opérationnelle à la quatrième fenêtre optique (78b ; 98) et étant en outre configuré pour acquérir le cinquième signal optique ($I_R$), le sixième signal optique ($I_R$), le septième signal optique ($I_T$) et le huitième signal optique ($I_T$), et pour mesurer l'intensité ($I_R$, $I_T$), respectivement, du cinquième signal optique ($I_R$), du sixième signal optique ($I_R$), du septième signal optique ($I_T$) et du huitième signal optique ($I_T$) ;
et le dispositif de commande (232) étant en outre configuré pour :

recevoir (158), en provenance du système de mesure (230), lesdites intensités mesurées ($I_R$, $I_T$) du cinquième signal optique ($I_R$), du sixième signal optique ($I_T$), du septième signal optique ($I_R$), et du huitième signal optique ($I_T$),
calculer (164) un cinquième rapport entre les intensités ($I_R$, $I_T$) du huitième signal optique ($I_T$) et du septième signal optique ($I_R$), et un sixième rapport entre les intensités ($I_R$, $I_T$) du sixième signal optique ($I_T$) et du cinquième signal optique ($I_R$), et
calculer (164) la section transversale d'absorption ($\alpha$) du deuxième échantillon de produit de combustion (GAS_2) sur la base d'un rapport entre le cinquième rapport et le sixième rapport de manière à annuler l'effet de l'interaction ($A_f$) entre le cinquième et le septième signal optique avec la troisième fenêtre optique (78a ; 88) et la quatrième fenêtre optique (78b ; 98) ;

et l'optique de transmission (4) étant en outre configurée pour recevoir une partie du huitième signal optique et la transmettre vers un deuxième produit de combustion (12), le deuxième produit de combustion (12) étant un gaz ou une particule produit par la combustion ;

et l'optique de réception (6) étant en outre configurée pour recevoir un deuxième signal rétrodiffusé (P) à la suite d'une interaction entre ladite partie du huitième signal optique et le deuxième produit de combustion (12) ;

et le module photodétecteur (8) étant en outre configuré pour acquérir le deuxième signal rétrodiffusé (P) et mesurer la puissance du deuxième signal rétrodiffusé (P) ;

le dispositif de commande (232) étant en outre configuré pour calculer (168) la concentration (N) du deuxième produit de combustion (12) sur la base de la puissance mesurée du deuxième signal rétrodiffusé (P) et de la section transversale d'absorption ($\alpha$) du deuxième échantillon de produit de combustion (GAS_2).

6. Procédé de détection d'incendie, mis en œuvre par un détecteur LIDAR ou DIAL, comprenant les étapes de :

- réduction (156) de la pression dans une première chambre étanche aux fluides (22 ; 222) à une pression de vide poussé ;
- entraînement (158) d'une source optique de type laser (40 ; 240) pour envoyer un premier signal optique ($I_R$) à une première longueur d'onde d'émission ($\lambda_L$ ; $\lambda_{L1}$) vers la première chambre (22 ; 222), le premier signal optique ($I_R$) étant reçu par la première chambre (22 ; 222) à travers une première fenêtre optique (78a ; 88) de la première chambre (22 ; 222) et ayant pour résultat qu'un troisième signal optique ($I_T$) provenant de la première chambre (22, 222) à travers une deuxième fenêtre optique (78b ; 98) de la première chambre (22 ; 222) à une première distance (L) de la première fenêtre optique (78a ; 88), est généré à la suite de l'interaction ($A_f$) du premier signal optique ($I_R$) avec la première fenêtre optique (78a ; 88) et la deuxième fenêtre optique (78b ; 98) ;
- injection (160) d'un premier échantillon de produit de combustion (GAS_1) dans la première chambre (22 ; 222), le premier échantillon de produit de combustion (GAS_1) étant un gaz ou une particule produit par la combustion ;
- entraînement (162) de la source optique (40 ; 240) pour envoyer un deuxième signal optique ($I_R$) à ladite première longueur d'onde d'émission ($\lambda_L$ ; $\lambda_{L1}$), le deuxième signal optique ($I_R$) étant reçu par la première chambre (22 ; 222) à travers la première fenêtre optique (78a ; 88), et résultant en un quatrième signal optique ($I_T$) provenant de la première chambre (22 ; 222) à travers la deuxième fenêtre optique (78b ; 98), le quatrième signal optique ($I_T$) étant généré à la suite de l'interaction ($A_f$, $A_g$) du deuxième signal optique ($I_R$) avec la première fenêtre optique (78a ; 88) et la deuxième fenêtre optique (78b ; 98) et avec ledit premier échantillon de produit de combustion (GAS_1) ;
- mesure (158, 162) des intensités ($I_R$, $I_T$), respectivement, du premier signal optique ($I_R$), du deuxième signal optique ($I_R$), du troisième signal optique ($I_T$) et du quatrième signal optique ($I_T$) ;
- calcul (164) d'un premier rapport entre les intensités ($I_R$, $I_T$) du quatrième signal optique ($I_T$) et du deuxième signal optique ($I_R$), et d'un deuxième rapport entre les intensités ($I_R$, $I_T$) du troisième signal optique ($I_T$) et du premier signal optique ($I_R$) ;
- calcul (164) de la section transversale d'absorption ($\alpha$) du premier échantillon de produit de combustion (GAS_1) sur la base d'un rapport entre le premier rapport et le deuxième rapport de manière à annuler l'effet de l'interaction ($A_f$) entre les premier et deuxième signaux optiques avec la première fenêtre optique (78a ; 88) et la deuxième fenêtre optique (78b ; 98) ;
- transmission (158) d'une partie du quatrième signal optique vers un premier produit de combustion (12), le premier produit de combustion (12) étant un gaz ou une particule produit par la combustion ;
- réception (158) d'un premier signal rétrodiffusé (P) à la suite d'une interaction entre ladite partie du quatrième signal optique et le premier produit de combustion (12) ;
- acquisition (158) du premier signal rétrodiffusé (P) et mesure de la puissance du premier signal rétrodiffusé (P) ; et
- calcul (168) de la concentration (N) du premier produit de combustion (12) sur la base de la puissance mesurée du premier signal rétrodiffusé (P) et de la section transversale d'absorption ($\alpha$) du premier échantillon de produit de combustion (GAS_1).

7. Procédé selon la revendication 6, comprenant en outre les étapes de :

- réception (50) d'un signal indiquant une concentration souhaitée (C) pour le premier échantillon de produit de combustion (GAS_1) ; et

- variation (52) d'un volume (V) de la première chambre (22 ; 222) de sorte que, une fois que le premier échantillon de produit de combustion (GAS_1) a été injecté (160) dans la première chambre (22 ; 222), il aura la concentration souhaitée (C) dans ledit volume (V) ;

l'étape de variation (52) dudit volume (V) comprenant les étapes de :

- couplage mécaniquement de manière amovible d'un premier élément tubulaire (82) de la première chambre (22 ; 222) à un second élément tubulaire (92), de sorte que le volume résultant (V) de la première chambre (22 ; 222) comprendra la somme des volumes du premier élément tubulaire (82) et du second élément tubulaire (92) ;
- déplacement éventuellement d'au moins l'un, entre la première fenêtre optique (88) et la deuxième fenêtre optique (98), d'un premier logement respectif (86a ; 86b ; 96a ; 96b) à un deuxième logement respectif (86a ; 86b ; 96a ; 96b) chacun des premier et deuxième logements (86a, 86b ; 96a, 96b) étant disposé dans une position correspondant à celle choisie parmi une première extrémité (82a) du premier élément tubulaire (82), une seconde extrémité (82b) du premier élément tubulaire (82), une première extrémité (92a) du second élément tubulaire (92), et une seconde extrémité (92b) du second élément tubulaire (92), de manière à faire varier la première distance (L) entre la première fenêtre optique (88) et la deuxième fenêtre optique (98) ;
- déplacement éventuellement de la première fenêtre optique (88) ou de la deuxième fenêtre optique (98) à l'intérieur du logement respectif (86a ; 86b ; 96a ; 96b) dans lequel elle est logée, de manière à faire varier une distance ($\Delta$L) à partir de l'extrémité respective (82a ; 82b ; 92a ; 92b) où elle est logée afin de faire varier la première distance (L) entre la première fenêtre optique (88) et la deuxième fenêtre optique (98).

8. Procédé selon la revendication 7, l'étape de variation (52) du volume (V) de la première chambre (22 ; 222) comprenant la commande (152) de la position de chacun des premier et second éléments tubulaires (82, 92) par une platine linéaire motorisée, permettant l'accouplement ou le désaccouplement des premier et second éléments tubulaires (82, 92).

9. Procédé selon l'une quelconque des revendications 6 à 8, comprenant en outre les étapes de :

- mesure (158, 162) des énergies ($E_R$, $E_T$), respectivement, du premier signal optique ($E_R$), du deuxième signal optique ($E_T$), du troisième signal optique ($E_R$) et du quatrième signal optique ($E_T$) ;
- calcul (64) d'un troisième rapport entre les énergies ($E_R$, $E_T$) du quatrième signal optique ($E_T$) et du deuxième signal optique ($E_R$), et d'un quatrième rapport entre les énergies ($E_R$ ; $E_T$) du troisième signal optique ($E_T$) et du premier signal optique ($E_R$) ;
- calcul (64) de la transmittance atmosphérique (T) et du coefficient d'extinction atmosphérique (*k*) du premier échantillon de produit de combustion (GAS_1) sur la base du rapport entre le troisième rapport et le quatrième rapport de manière à annuler l'effet de l'interaction ($A_f$) entre les premier et deuxième signaux optiques avec la première fenêtre optique (78a ; 88) et la deuxième fenêtre optique (78b ; 98) et
- calcul (168) de la concentration (N) du premier produit de combustion (12) sur la base de la puissance mesurée du premier signal rétrodiffusé (P) et sur la base de la section transversale d'absorption calculée ($\alpha$), de la transmission atmosphérique (T) et du coefficient d'extinction atmosphérique (*k*) du premier échantillon de produit de combustion (GAS_1).

10. Procédé selon l'une quelconque des revendications 6 à 9, comprenant en outre les étapes de :

- réduction (156) de la pression dans une deuxième chambre étanche aux fluides (223) à une pression de vide poussé ;
- entraînement (158) de la source optique (240) pour envoyer un cinquième signal optique ($I_R$) à une deuxième longueur d'onde d'émission ($\lambda_{L2}$) vers la deuxième chambre (223), le cinquième signal optique ($I_R$) étant reçu par la deuxième chambre (223) à travers une troisième fenêtre optique (78a ; 88) de la deuxième chambre (223) et résultant en un sixième signal optique ($I_T$) provenant de la deuxième chambre (223) à travers une quatrième fenêtre optique (78b ; 98) de la deuxième chambre (223) à une deuxième distance (L) de la troisième fenêtre optique (78a ; 88), le sixième signal optique ($I_T$) étant généré à la suite d'une interaction ($A_f$) du cinquième signal optique ($I_R$) avec la troisième fenêtre optique (78a ; 88) et la quatrième fenêtre optique (78b ; 98) ;
- injection (160) d'un deuxième échantillon de produit de combustion (GAS_2) dans la deuxième chambre (223), le deuxième échantillon de produit de combustion (GAS_2) étant un gaz ou une particule produit par la combustion ;
- entraînement (162) de la source optique (240) pour envoyer un septième signal optique ($I_R$) à ladite deuxième longueur d'onde d'émission ($\lambda_{L2}$), le septième signal optique ($I_R$) étant reçu par la deuxième chambre (223) à travers la troisième fenêtre optique (78a ; 88) et résultant en un huitième signal optique ($I_T$) provenant de la deuxième chambre (223) à travers la quatrième fenêtre optique (78b ; 98), le huitième signal optique ($I_T$) étant généré à la suite d'une interaction ($A_f$, $A_g$) du septième signal optique ($I_R$) avec la troisième fenêtre optique (78a ; 88) et la quatrième fenêtre optique (78b ; 98) et avec ledit deuxième échantillon de produit de combustion (GAS_2) ;

- mesure (158, 162) des intensités ($I_R$, $I_T$), respectivement, du cinquième signal optique ($I_R$), du sixième signal optique ($I_T$), du septième signal optique ($I_R$) et du huitième signal optique ($I_T$) ;

- calcul (164) d'un cinquième rapport entre les intensités ($I_R$, $I_T$) du huitième signal optique ($I_T$) et du septième signal optique ($I_R$), et d'un sixième rapport entre les intensités ($I_R$, $I_T$) du sixième signal optique ($I_T$) et du cinquième signal optique ($I_R$) ;

- calcul (164) de la section transversale d'absorption ($\alpha$) du deuxième échantillon de produit de combustion (GAS_2) sur la base d'un rapport entre le cinquième rapport et le sixième rapport de manière à annuler l'effet de l'interaction ($A_f$) entre le cinquième et le septième signal optique avec la troisième fenêtre optique (78a ; 88) et la quatrième fenêtre optique (78b ; 98) ;

- transmission (158) vers un deuxième produit de combustion (12) ;

- réception (158) d'un deuxième signal rétrodiffusé (P) à la suite d'une interaction entre ladite portion du sixième signal optique et le deuxième produit de combustion (12) ;

- acquisition (158) du deuxième signal rétrodiffusé (P) et mesure de la puissance du deuxième signal rétrodiffusé (P) ; et ;

- calcul (168) de la concentration (N) du deuxième produit de combustion (12) sur la base de la puissance mesurée du deuxième signal rétrodiffusé (P) et de la section transversale d'absorption ($\alpha$) du deuxième échantillon de produit de combustion (GAS_2).

FIG. 1

EP 3 543 983 B1

FIG. 2

START

RECEIVE INFORMATION ON GAS AND LASER — 50

OPTIMIZE CHAMBER VOLUME V — 52

ALIGN LASER WITH CHAMBER — 54

GENERATE VACUUM IN CHAMBER — 56

MEASURE $E_T$, $E_R$, $I_T$, $I_R$ WITH CHAMBER EMPTY — 58

INJECT GAS IN CHAMBER — 60

MEASURE $E_T$, $E_R$, $I_T$, $I_R$ WITH CHAMBER FULL — 62

CALCULATE OPTICAL PARAMETERS $\alpha(\lambda_L)$, $\beta(\lambda_L)$, $k(\lambda_L)$ — 64

CALCULATE SENSITIVITY $N_{min}$ — 66

FIG. 3

FIG. 4

EP 3 543 983 B1

FIG. 5

FIG. 6

EP 3 543 983 B1

FIG. 7

Fig. 8

EP 3 543 983 B1

START

RECEIVE TARGET GAS MEASUREMENT REQUEST — 148

CALCULATE LASER CHARACTERIZATION PARAMETERS — 150

OPTIMIZE CHAMBER VOLUME V — 152

ALIGN LASER WITH CHAMBER — 154

GENERATE VACUUM IN CHAMBER — 156

MEASURE $E_T$, $E_R$, $I_T$, $I_R$, $P$ WITH CHAMBER EMPTY — 158

INJECT GAS IN CHAMBER — 160

MEASURE $E_T$, $E_R$, $I_T$, $I_R$, $P$ WITH CHAMBER FULL — 162

CALCULATE OPTICAL PARAMETERS $\alpha(\lambda_L)$, $\beta(\lambda_L)$, $k(\lambda_L)$ — 164

CALCULATE SENSITIVITY $N_{min}$ — 166

CALCULATE LASER CHARACTERIZATION PARAMETERS — 168

Fig. 9

Fig. 10

EP 3 543 983 B1

43

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4853543 A